# EUROPEAN PATENT SPECIFICATION

(11) **EP 3 071 893 B1**
(45) Date of publication and mention of the grant of the patent: **06.03.2019**
(21) Application number: 14864659.9
(22) Date of filing: 19.11.2014
(51) Int. Cl.: F24F 3/14, F24F 3/147, F28F 3/04, B23P 15/26, F28D 1/03, F28D 3/04, F28D 9/00, F28D 21/00

(54) **METHODS AND SYSTEMS FOR TURBULENT, CORROSION RESISTANT HEAT EXCHANGERS**
VERFAHREN UND SYSTEME FÜR TURBULENTE KORROSIONSBESTÄNDIGE WÄRMEÜBERTRÄGER
PROCÉDÉS ET SYSTÈMES POUR ÉCHANGEURS DE CHALEUR RÉSISTANTS À LA CORROSION, À ÉCOULEMENT TURBULENT

(30) Priority: 19.11.2013 US 201361906219 P; 12.03.2014 US 201461951887 P
(43) Date of publication of application: 28.09.2016
(73) Proprietor: 7AC Technologies, Inc., Beverly, MA 01915 (US)
(72) Inventor: VANDERMEULEN, Peter, F., Newburyport, MA 01950 (US); ALLEN, Carl, Beverly, MA 01915 (US); MADIGAN, Richard, Beverly, MA 01915 (US)
(74) Representative: Ahmad, Sheikh Shakeel
(86) International application number: PCT/US2014/066452
(87) International publication number: WO 2015/077364

(56) References cited:
- US-A- 5 462 113
- US-A- 5 462 113
- US-A1- 2002 148 602
- US-A1- 2002 148 602
- US-A1- 2003 230 092
- US-A1- 2003 230 092
- US-A1- 2010 084 120
- US-A1- 2010 084 120
- US-A1- 2012 131 939
- US-A1- 2012 131 939

## Description

### CROSS REFERENCE TO RELATED APPLICATIONS

This application claims priority from U.S. Provisional Patent Application No. 61/906,219 filed on November 19, 2013 entitled METHODS AND SYSTEMS FOR TURBULENT, CORROSION RESISTANT HEAT EXCHANGERS and from U.S. Provisional Patent Application No. 61/951,887 filed on March 12, 2014 also entitled METHODS AND SYSTEMS FOR TURBULENT, CORROSION RESISTANT HEAT EXCHANGERS.

### BACKGROUND

The present application relates generally to the use of liquid desiccants to dehumidify and cool an air stream entering a space. More specifically, the application relates to the use of micro-porous membranes to separate the liquid desiccant from the air stream wherein the fluid streams (air, cooling fluids, and liquid desiccants) are made to flow turbulently so that high heat and moisture transfer rates between the fluids can occur. The application further relates to corrosion resistant heat exchangers between two or three fluids. Such heat exchangers can use gravity induced pressures (siphoning) to keep the micro-porous membranes properly attached to the heat exchanger structure.

Liquid desiccants have been used in parallel to conventional vapor compression HVAC equipment to help reduce humidity in spaces, particularly in spaces that either require large amounts of outdoor air or that have large humidity loads inside the building space itself. Humid climates, such as for example Miami, FL require a large amount of energy to properly treat (dehumidify and cool) the fresh air that is required for a space's occupant comfort. Conventional vapor compression systems have only a limited ability to dehumidify and tend to overcool the air, oftentimes requiring energy intensive reheat systems, which significantly increase the overall energy costs because reheat adds an additional heat-load to the cooling coil. Liquid desiccant systems have been used for many years and are generally quite efficient at removing moisture from the air stream. However, liquid desiccant systems generally use concentrated salt solutions such as solutions of LiCl, LiBr or CaCl₂ and water. Such brines are strongly corrosive, even in small quantities so numerous attempt have been made over the years to prevent desiccant carry-over to the air stream that is to be treated. One approach - generally categorized as closed desiccant systems - is commonly used in equipment dubbed absorption chillers, places the brine in a vacuum vessel, which then contains the desiccant. Since the air is not directly exposed to the desiccant, such systems do not have any risk of carry-over of desiccant particles to the supply air stream. Absorption chillers however tend to be expensive both in terms of first cost and maintenance costs. Open desiccant systems allow a direct contact between the air stream and the desiccant, generally by flowing the desiccant over a packed bed similar to those used in cooling towers. Such packed bed systems suffer from other disadvantages besides still having a carry-over risk: the high resistance of the packed bed to the air stream results in larger fan power and pressure drops across the packed bed, requiring thus more energy. Furthermore, the dehumidification process is adiabatic, since the heat of condensation that is released during the absorption of water vapor into the desiccant has no place to go. As a result both the desiccant and the air stream are heated by the release of the heat of condensation. This results in a warm, dry air stream where a cool dry air stream was desired, necessitating the need for a post-dehumidification cooling coil. Warmer desiccant is also exponentially less effective at absorbing water vapor, which forces the system to supply much larger quantities of desiccant to the packed bed which in turn requires larger desiccant pump power, since the desiccant is doing double duty as a desiccant as well as a heat transfer fluid. The larger desiccant flooding rate also results in an increased risk of desiccant carryover. Generally air flow rates need to be kept well below the turbulent region (at Reynolds numbers of less than ∼2,400) to prevent carryover. Applying a micro-porous membrane to the surface of the liquid desiccant has several advantages. First it prevents any desiccant from escaping (carrying-over) to the air stream and becoming a source of corrosion in the building. Second, the membrane allows for the use of turbulent air flows enhancing heat and moisture transfer, which in turn results in a small system since it can be build more compactly. The micro-porous membrane retains the desiccant typically by being hydrophobic and breakthrough of desiccant can occur but only at pressures significantly higher than the operating pressure. The water vapor in an air stream over the membrane diffuses through the membrane into the underlying desiccant resulting in a drier air stream. If the desiccant is at the same time cooler than the air stream, a cooling function will occur as well, resulting in a simultaneous cooling and dehumidification effect.

U.S. Patent Application No. 13/115,800, U.S. Patent Application Publication No. US 2012/0132513 A1, and PCT Application No. PCT/US11/037936 by Vandermeulen et al. disclose several embodiments for plate structures for membrane dehumidification of air streams. U.S. Patent Application No. 13/915,199, PCT Application No. PCT/US13/045161, and U.S. Patent Application Nos. 61/658,205, 61/729,139, 61/731,227, 61/736,213, 61/758,035 and 61/789,357 by Vandermeulen et. al disclose several manufacturing methods and details for manufacturing membrane desiccant plates.

Kozubal (U.S. Patent Application No. 2013/0340449) discloses a two-stage system (in FIGS. 17 and 18) for dehumidifying and cooling an air stream. This system's first stage comprises a membrane plate over which an air stream is directed, which can be outside air. The rear side of the membrane plate has a secondary air stream which can also be outside air. A liquid desiccant is flown over the front side and behind the membrane which results in moisture absorption from the primary air stream. The heat released by the moisture absorption is conducted through the plate wall into the secondary air stream, which is being humidified with water. The evaporation of water causes a cooling effect close to the wet bulb temperature of the secondary air stream. The air stream that leaves the first stage is thus dry and close to the wet bulb temperature of the secondary air stream. The air leaving the first stage is now directed to an indirect evaporative cooling stage that comprises a set of plates with a bare surface making a first air channel and an evaporative channel on the backside of those plates. A portion of the primary air in the second stage is siphoned off and directed to the rear evaporative channel where is creates a significant amount of cooling. The theoretical maximum amount of cooling that can be achieved on the rear is close to the dew point of the primary air stream entering the second stage. The combination of the two stages is thus able to dehumidify and cool an air stream albeit at a loss of about 25-30% of the primary air stream in the second stage to the evaporative channel of that stage.

Membrane modules often suffer from problems wherein glue or adhesion layers are stressed by temperature differences across the various components. This is particularly difficult in components that are operating under high temperatures such as liquid desiccant regenerators. In order to inhibit cracking of the plastics or failures of the bonds or adhesives, a 2-part plate structure is disclosed that has a first part made from a harder plastic (such as, e.g., ABS (Acrylonitrile Butadiene Styrene)) and a second part made from a compliant material (such as, e.g., EPDM (Ethylene Propylene Diene Monomer) rubber or Polyurethane). One advantage of this structure is that the compliant material easily absorbs the differences in expansion coefficients, while still providing for fluid passages and other features such as edge seals for air passages and turbulating features for those same air passages.

Membrane modules often suffer from problems wherein glue or adhesion layers are stressed by temperature differences across the various components. This is particularly difficult in components used for the regeneration of the desiccant, since many common plastics have high thermal expansion coefficients. Oftentimes specialty high-temperature plastics are employed that are expensive to use in manufacturing. Bonding large surface areas together also creates problems with the adhesion and can cause stress fractures over time. Potting techniques (typically a liquid poured epoxy thermoset plastic) have some resilience if the potting material remains somewhat compliant even after curing. However the systems and methods described herein are significantly more resistant to expansion caused by high temperatures, which keeping the manufacturing process simple and robust.

Furthermore, a problem when building conditioner and regenerator systems for 2-way liquid desiccants is that it is hard to design a system that provides uniform desiccant distribution on both sides of a thin sheet of plastic support material. The systems and methods described herein show a simple method for exposing an air stream to a series of membranes covering the desiccant.

There thus remains a need for a system that provides a cost efficient, manufacturable and thermally efficient method to capture moisture from an air stream, while simultaneously cooling such an air stream and while also eliminating the risk of contaminating such an air stream with liquid desiccant particles.

Heat exchangers (mostly for 2 fluids) are very commonly used in many applications for heat transfer and energy recovery. Most heat exchangers are constructed out of metals such as copper, stainless steel and aluminum. Generally speaking such heat exchangers incorporate feature that attempt at disturbing the fluid flows in order to enhance the heat transfer between the fluid and the metal surfaces. Boundary layers on the surface of the metals create larger resistances to heat transfer. In quite a few applications, one or both of the fluids can be corrosive to the commonly used metals. Surface coatings can help prevent corrosion, but tend to also have decreased heat transfer. Metals that are not sensitive to corrosion, such as Titanium, are generally considered expensive to use and difficult to work with. Plastics can be used but they oftentimes cannot withstand the operating pressures and temperatures that are typically used for the fluids. There thus remains a need for a cost-effective, corrosion resistant liquid to liquid heat exchanger. Furthermore, US 2003/0230092 describes an air conditioner comprising a plurality of plates arranged in a successively stacked configuration with portions thereof having a spaced apart arrangement, and defining between successive adjacent pairs of plates at the spaced apart portions a first and second series of discrete alternating passages wherein a first air stream is passed through the first series of passages and a second air stream is passed through the second series of passages; and said stacked configuration of plates forming integrally therewith a liquid delivery means for delivering from a source a sufficient quantity of a liquid to the inside surfaces of the first series of fluid passages in a manner which provides a continuous flow of the liquid from a first end to a second end of the plurality of plates while in contact with the first air stream.

### SUMMARY

Provided herein are a method of manufacturing a three-way heat exchanger for use in a desiccant air conditioning system according to Claim 1 and a three-way heat exchanger for use in a desiccant air conditioning system according to Claim 4. In accordance with one or more embodiments the liquid desiccant flows down the face of a support plate as a falling film. In accordance with one or more embodiments, the liquid desiccant is covered by a microporous membrane so that liquid desiccant is unable to enter the air stream, but water vapor in the air stream is able to be absorbed into the liquid desiccant. In some embodiments, the air stream contains a turbulator: a material that induces turbulence in the air flow so that the air does not become laminar over the surface of the desiccant. In some embodiments, the turbulator is a plastic netting material. In some embodiments, the turbulator is a series of plastic wires that span across the air flow. In some embodiments, the membrane is a bi-axially stretched polypropylene membrane. In some embodiments, the liquid desiccant flows through a wicking material such as a flocked material using Nylon or Rayon flocking fibers. In some embodiments, the membrane is bonded through the screen or wicking material onto a support plate. In some embodiments, the support plate is a thermally formed rigid plastic such as a formed plate manufactured from a common plastic material like (Recycled) Poly Ethylene Terephthalate ((R)PET), Poly-Propylene (PP), Poly Ethylene (PE), (High Impact) Poly Styrene ((HI)PS), Acrylonitrile Butadiene Styrene (ABS), Poly Carbonate (PC) or other suitable plastic. In some embodiments, the support plates are doped with fire retarding additives or thermally conductive additives. In some embodiments, desiccant outlet and distribution features are formed in the support plate to ensure that desiccant is evenly distributed along the surface of the plate and amongst several similar plates. In some embodiments, the distribution features contain outlet resistance channels meant to induce a certain amount of back pressure in the outlets to ensure even flow rates between multiple outlet holes in the support plate. In some embodiments, the out resistance channels allow the desiccant to flow into a distribution structure of horizontal lines and dots that are designed to distribute the desiccant evenly and to slow down the desiccant flow rate. In some embodiments, the support plate contains formed ridges designed to form a portion of an air channel. In some embodiments, the support plate contains other ridges designed to form a liquid seal between two support plates when those two plates are bonded together. In some embodiments, multiple liquids can so be directed to several areas on the front and rear surfaces of the support plates. In some embodiments, the thermoformed mold can be changed by using inserts that allow one support plate to support a vertical air stream and after changing the mold inserts another support plate to support a horizontal air stream. In some embodiments, the support plate is cooled on the opposite side by a cooling fluid. In some embodiments, the support plate is cooled on the opposite side by evaporation of water in a secondary air stream. In some embodiments, the cooling fluid is water or a water/glycol mixture. In some embodiments, the cooling fluid flows through a plastic mesh wherein the plastic mesh sets the distance between the support plate and a second support plate and wherein the cooling fluid is made to become turbulent by the mesh. In some embodiments, the mesh is a dual plane diamond plastic mesh. In some embodiments, the second support plate is bonded to the first support plate by a series of adhesive dots so that the plates do not bulge out due to the cooling fluid pressure. In some embodiments, the support plates are formed so that similar features of the diamond mesh are formed directly into the support plate. In some embodiments, the support plate is joined to a second support plate wherein both plates contain features that achieve the functions of the diamond mesh: setting a fixed distance between the two support plates and creating a turbulent mixing cooling fluid flow. In some embodiments, the features of the wicking material or screen material on the desiccant side are also incorporated into the support plates. In some embodiments, the glue dots on either or both the desiccant or cooling fluid side are replaced by thermal bonding, ultrasonic bonding, or some other bonding method to connect to a membrane or to a second support plate. In some embodiments, the support plate itself contains an adhesive on the plastic that is activate by some process, either by heat, or ultrasonic sound or microwaves or some other suitable method.

In some embodiments, the diamond mesh comprises a co-extruded plastic and an adhesive. In some embodiments, the plastic is coated with an adhesive in a separate process step. In some embodiments, the second support plate provides a second screen and mesh and faces a second air gap containing a second air turbulator. In some embodiments, a so constructed membrane plate assembly is provided with multiple liquid supply- and drain ports so that uniform liquid distribution is achieved across the surfaces of the membrane and support plates. In some embodiments, the ports are reconfigurable so that the air can be directed in either a horizontal or vertical fashion across the membranes. In some embodiments, the air turbulator is constructed so that it is effective for either horizontal or vertical air flow. In some embodiments, the liquid ports can be configured so that the cooling fluid is always flowing against the direction of the air flow so that a counter-flow heat exchange function is obtained. In some embodiments, the drain ports to the plate are constructed in such a way as to provide a siphoning of the leaving liquids thereby creating a negative pressure between the support plates with respect to atmospheric pressure and a negative pressure between the support plate and the membrane ensuring that the membrane stays flat against the screening material or wicking fabric. In some embodiments, the main seals in between the support plates are constructed so as to provide a self-draining function so no liquids stay inside the membrane plate system. In some embodiments, the self-draining features are thermally formed directly into the support plate. In some embodiments, such self-draining seals create separate areas for the liquid desiccants and for the cooling fluids so that a leak in one of the seals will not affect the other fluid. In some embodiments, the glue dots are minimized to take advantage of the siphoning of the liquids leaving the channels of the plate thereby maximizing the available membrane area.

Systems and methods are provided wherein the support plate assemblies described in the previous section are connected by thermally bonding two plates together thereby forming an air channel. In some embodiments, the support plates each have a membrane attached to their front sides (facing the air gap). In some embodiments, the support plates have a wicking material on the rear side (away from the air gap). In some embodiments, the support plates have a wicking material on both sides or a membrane on both sides. In some embodiments, an air turbulator is added to the air channel while the two support plates are bonded together. In some embodiments, the air turbulator is another thermoformed or injection molded plate using similar plastics as the support plates. In some embodiments, the air turbulator is made using plastic extruded netting.

In some embodiments, a series of so constructed plates and spacers as discussed above are placed in a membrane module. In some embodiments, the membrane module contains a larger series of plates. In some embodiments, the ports in the membrane module can be reconfigured so that the cooling fluid is always directed against the flow of the air stream. In some embodiments, the cooling fluid is replaced by a heating fluid. In some embodiments, the heating fluid is used to evaporate water vapor from the desiccant into the air stream through the membrane rather than absorbing water vapor into the desiccant when the fluid is cool.

In accordance with one or more embodiments, air treatment modules are disclosed comprising alternating rigid and flexible materials. In some embodiments, the flexible element forms a liquid distribution channel at the top of the module and a similar liquid distribution channels at the bottom of the module, connected by two more rigid membrane support plates. In some embodiments, the support plates have holes for fluid supply and fluid drain incorporated in them. In some embodiments, the support plates have a series of membranes attached over them. In some embodiments, the membranes are connected to the support plate using an adhesive. In some embodiments, the adhesive is applied using a stencil or screen material that also prints edge seals, support dots for holding and distributing the membrane and outlet channels for slowing down the desiccant flow rate using the adhesive. In some embodiments, the edge seal, support dots for holding and distributing the membrane, and outlet channels for slowing down the desiccant flow rate and other features are integrated into the support plate during the thermo forming process. In some embodiments, the thermoformed support plate also contains a series of features inside the support dots that are directed away from the membrane so that the diamond water mesh can be eliminated and so that condensation on the support dots is avoided. In some embodiments, the support plate is manufactured using an injection molding process. In some embodiments, the injection molded support plate also contains a series of features inside the support dots that a directed away from the membrane so that the diamond water mesh can be eliminated and so that condensation on the support dots is avoided. In some embodiments, the support plate is manufactured using a twin-wall thermo forming process or other suitable manufacturing process.

In some embodiments, the thermoformed turbulator has walls that are sloped at an angle to the air stream. In some embodiments, the turbulator walls that are alternatingly sloped at opposite angles to the air stream. In some embodiments, the turbulator walls get smaller in the downstream direction. In some embodiments, the turbulator has a secondary structure that contains walls that are directing the air stream back towards the opposite direction from the primary wall structure in such a way that a rotation in the air stream is enhanced. In some embodiments, the combination of primary and secondary walls results in a counter-rotating air stream down an air channel.

Methods and systems are also provided wherein the rear side of a thermoformed plate received adhesive lines from for example a gluing robot. In some embodiments, the adhesive lines form a liquid supply or drain channel. In some embodiments, the liquid supply or drain channel is shaped in such a way that fluids can easily drain from them when the liquid pump is switched off. In some embodiments, adhesive lines are formed to create an area for liquid flow in a generally vertical direction. In some embodiments, the adhesive lines are complimented by a series of smaller dots or lines to bond two of the thermoformed plates together and to ensure a uniform distribution of the liquid across the rear of the thermoformed plates. In some embodiments, the adhesive lines are formed to create an area for liquid flow in a generally horizontal direction. In some embodiments, the adhesive lines are formed to create an area for liquid flow in an alternating vertically upward and downward flow pattern. In some embodiments, the lines creating the upward and downward channels are not extended all the way to the edges in order to let water drain out and air escape from the channel structure. In some embodiments, there are two supply ports and two drain ports for the water channels and there are two sections of up and down water channels created by the gluing channels while maintaining the ability to let water drain out and air escape from the channel structure.

Systems and methods are provided wherein the support plate assemblies described in the previous section are connected by thermally bonding two plates together thereby forming a primary air channel. In some embodiments, a secondary air channel is formed by using adhesive lines on the rear of the support plates. In some embodiments, the primary air channel is in a vertical orientation and the secondary air channel is in a horizontal orientation. In some embodiments, the primary air channel's air stream is exposed to water or a liquid desiccant behind an optional membrane. In some embodiments, the secondary air channel is a dry channel with no liquids on the surface thereby creating an indirect evaporative cooling system if the primary air channel uses water. In some embodiments, the secondary air channel is a wet channel wherein water or sea water is provided as a secondary liquid on the surface of the secondary channel in a wicking material such as a flocking made with Nylon or Rayon materials. In some embodiments, such a channel cools the primary channel and the primary channel contains a desiccant to cool and dehumidify the primary air stream. In some embodiments, the secondary air channel uses adhesive lines to contain and direct the secondary liquid. In some embodiments, air directing features are also achieved by using adhesive lines in the secondary channel.

Systems and methods are provided wherein the support plate assemblies described in the previous section are connected by thermally bonding two plates together thereby forming a primary air channel. In some embodiments, dry, relatively warm air is directed through the primary air channel. In some embodiments, the primary air channel is on the rear of the plates and is a dry channel with no liquids on its walls. In some embodiments, the secondary channel is on the front of the plates and receives a portion of the primary air which is directed in a counter flow to the primary air stream. In some embodiments, the secondary air stream is directed over a membrane area behind which water or seawater is flowing. In some embodiments, the secondary air flow creates a strong cooling effect on the primary air channel resulting in a leaving primary air stream that is cold and dry. In some embodiments, the secondary leaving air stream is relatively warm and very moist. In some embodiments, adhesive lines for the primary air channel and are extended in such a way as to create an edge seal for the air channel.

Systems and methods are provided wherein the support plate assemblies described previously are connected by thermally bonding two plates together thereby forming a primary air channel. In some embodiments, the plates have provisions for two liquids and two air streams. In some embodiments, dry, relatively warm air is directed through a primary air channel. In some embodiments, the primary air channel is on the front of the plates and is a wet channel with a first liquid on its walls. In some embodiments, the first liquid is a liquid desiccant. In some embodiments, a secondary channel is formed on the rear of the plates and receives a secondary air stream. In some embodiments, the secondary air stream is directed over a wetted area, which has water or seawater is flowing over it, constituting a second liquid. In some embodiments, the secondary air flow across the second liquid creates a cooling effect on the primary air channel resulting in a leaving primary air stream that is cold and dry. In some embodiments, the secondary leaving air stream is relatively warm and moist. In some embodiments, adhesive lines for the secondary air channel and are extended in such a way as to create an edge seal for the air channel. In some embodiments, the air stream in the secondary channel is first directed from a primarily vertical orientation to a horizontal flow counter to the flow in the primary air channel. The flow is subsequently diverted to become vertical again to become an exhaust air flow. In some embodiments,, the first liquid is directed by adhesive channels to the front of the support plates. In some embodiments,, the second liquid is directed by adhesive channels to form a wetted surface on the rear of the support plates. In some embodiments, turbulating plates can be added in the primary and/or the secondary air channels. In some embodiments, features are added by using adhesive lines or thermoformed parts of the support plates to ensure even and uniform air flow distribution along the primary and secondary air channels.

Systems and methods are provided wherein the support plate assemblies described previously are formed with two distinct stages and are connected by thermally bonding two plates together thereby forming a primary air channel. In some embodiments, the plates have provisions for two stages each accommodating two liquids and two air streams. In some embodiments, the first stage receives a relatively warm, moist air stream in the primary channel. In some embodiments, the first stage contains a desiccant behind a micro-porous membrane exposed to the primary air channel. In some embodiments, the rear of the first stage contains an evaporative channel with a secondary air flow. In some embodiments, the rear of the first stage contains a liquid channel with a heat transfer fluid. In some embodiments, the secondary air flow is in counter flow to the air stream in the primary channel. In some embodiments, the heat transfer fluid is in counter flow to the air stream in the primary channel. In some embodiments, the treated air from the first stage in the primary channel is directed to a second stage containing a non-microporous membrane behind which a liquid desiccant flows. In some embodiments, the second stage provides indirect evaporative cooling to both the air in the primary channel and the desiccant behind the non-microporous membrane. In some embodiments, the rear of the second stage contains an evaporative channel with a secondary air flow. In some embodiments, the rear of the second stage contains a liquid channel with a heat transfer fluid. In some embodiments, the secondary air flow is in counter flow to the air stream in the primary channel. In some embodiments, the heat transfer fluid in the rear of the second stage is in counter flow to the air stream in the primary channel in the second stage. In some embodiments, some of the air exiting the second stage is directed towards the secondary air channel on the rear of the second stage. In some embodiments, the second stage contains provisions for two liquids and two air streams. In some embodiments, the first liquid in the second stage is a liquid desiccant and is directed behind a non-microporous membrane exposed to a primary air channel. The non-microporous membrane provides for sensible cooling of the liquid desiccant but no mass exchange can take place. In some embodiments, the second liquid is water or seawater and is directed to the rear of the plate where is creates a wetted channel for a secondary air stream. In some embodiments, the secondary channel in the second stage creates a significant cooling effect, thus cooling both the liquid desiccant and the primary air channel in the second stage. In some embodiments, the air stream in the secondary channel of the second stage is diverted by adhesive lines to be uniformly flowing. In some embodiments, the air stream in the secondary channel the second stage is diverted by adhesive lines to become an exhaust air stream. In some embodiments, the liquid desiccant and excess water from the second stage are collected at the bottom of the second stage and are directed as inputs to a first stage. Since both the liquid desiccant and the excess water are relatively cold, the first stage will function more effectively and the liquid desiccant can be operated at lower concentrations. In some embodiments, the liquid desiccant is first provided to the second stage behind a non-porous membrane or thin layer so the desiccant is sensibly cooled and the cooled desiccant is then directed to the first stage where it is directed behind a porous membrane and where it is dehumidifying and cooling the air stream. In some embodiments, the water is first directed to the backside of the first stage and excess water that has not evaporated is collected at the bottom of the first stage and is then directed to the backside of the second stage where a second evaporation step takes place.

Methods and systems are provided wherein two liquids exchange heat between them through a series of parallel thermoformed plastic plates. In some embodiments, the fluids are corrosive fluids. In some embodiments, the fluids function as desiccants. In some embodiments, the desiccants contain LiCl, CaCl2, Ca(NO3)2, LiBr and water or other Halide salt solutions. In some embodiments, one liquid is hot and the other liquid is cold. In some embodiments, the parallel plate structure comprises plates with an adhesive edge seal. In some embodiments, the plastic material is a (Recycled) Poly Ethylene Terephthalate ((R)PET), Poly-Propylene (PP), Poly Ethylene (PE), (High Impact) Poly Styrene ((HI)PS), Acrylonitrile Butadiene Styrene (ABS), Poly Carbonate (PC) or other suitable plastic. In some embodiments, the plates are thermoformed in such a way as to provide first liquid channel with liquid supply seals and edge seals as well as turbulating features in the first channel. In some embodiments, the second liquid channel contains a netting material to evenly distribute the liquid flow in the second channel. In some embodiments, the second channel contains adhesive lines that form an edge seal as well as adhesive lines that form liquid supply seals and/or liquid distribution features.

Methods and systems are provided wherein two liquids exchange heat between them through a series of parallel thermoformed plastic plates. In some embodiments, the two liquid channels are formed in a single thermoform plate. In some embodiments, the thermoformed plate contains forms that are a mirror image of each other in such a way that when the plate is folded in the middle the opposing features meet and some of the opposing features can be heat bonded or adhered together to form a liquid channel. In some embodiments, the so formed liquid channel contains edge seals, seal for the liquid in a second channel and turbulating or distribution features meant to enhance heat transfer and promote liquid uniformity. In some embodiments, a second channel is formed on top of the folded plate of the first channel by an adhesive set of lines. In some embodiments, the so formed adhesive liquid channel contains edge seals, seal for the liquid in the first channel and turbulating or distribution features meant to enhance heat transfer and promote liquid uniformity. In some embodiments, several of the so formed plate pairs are stacked together to for a complete heat exchanger.

Methods and systems are provided wherein a primary thermoformed plate material is provided with a cap layer of a low melting plastic such as polyethylene. In some embodiments, the cap layer is adhered to the membrane by application of heat. In some embodiments, a cap layer is applied to the base thermoform material and subsequently a corona, plasma, mechanical or chemical treatment is applied to the cap layer to enhance liquid distribution over the cap layer. In some embodiments, the rear of the base thermoform material is also corona plasma, mechanically or chemically treated to enhance adhesion of other materials such as adhesive seals. In some embodiments, the rear of the thermoform material is provided with a flocking or wicking material to enhance fluid distribution and evaporation.

In no way is the description of the applications intended to limit the disclosure to these applications. Many construction variations can be envisioned to combine the various elements mentioned above each with its own advantages and disadvantages. The present disclosure in no way is limited to a particular set or combination of such elements.

### BRIEF DESCRIPTION OF THE FIGURES

FIGS. 1A and 1B (collectively FIG. 1) depict a three-way membrane plate construction.
FIGS. 2A and 2B (collectively FIG. 2) show a thermoformed 3 way membrane plate construction wherein the water or heat transfer fluid channel is formed with the thermoformed components.
FIG. 3 shows a 3-fluid thermoformed plate structure wherein the air and desiccant channels are formed in the plate and the airflow is directed to be vertical.
FIG. 4 shows a 3-fluid thermoformed plate structure wherein the air and desiccant channels are formed in the plate and the airflow is directed to be horizontal.
FIG. 5 illustrates a detail of the top right corner of FIG. 3 and FIG. 4 showing features designed to ensure uniform desiccant flow over the plate.
FIG. 6 shows the features and components on the rear side of the thermoformed plate of FIG. 3 and FIG. 4.
FIG. 7 shows the first two-plate-pairs in a three-fluid membrane module wherein each two-plate-pair contains two of the plates in FIG. 3 and wherein the two plates are bonded together to form an air channel.
FIG. 8A shows alternate ways of directing heat transfer fluids on the rear of the plate from FIG. 6 wherein the heat transfer fluid flow direction is primarily vertical, and from the bottom to the top of the plate.
FIG. 8B shows alternate ways of directing heat transfer fluids on the rear of the plate from FIG. 6 wherein the heat transfer fluid flow direction is primarily horizontal and from the right side to the left side of the plate.
FIG. 9A illustrates an alternate way of directing a heat transfer fluid on the rear of the plate from FIG. 6, wherein the fluid is alternately directed up and down along the rear of the plate and generally in counter flow to the air stream present on the opposite side of the plate.
FIG. 9B illustrates an alternate method of directing a heat transfer fluid on the rear of the plate from FIG. 6, wherein the fluid is provided from two supply ports and directed to two drain ports and generally flows in a direction counter to the air stream present on the opposite side of the plate, while maintaining the ability to remove air entrapped in the plates and the ability to self-drain when the water flow is stopped.
FIG. 10A shows a thermoformed air turbulator structure intended to be used in an air channel of a 2-fluid or 3-fluid membrane module to enhance heat and mass transfer in the air channel.
FIG. 10B shows a detail of the air turbulator structure of FIG. 10A.
FIG. 11 shows an alternate air turbulator structure, which comprises extruded plastic or metallic netting.
FIG. 12 illustrates an exploded view of the entire 3-fluid path membrane module 2-plate pair structure of FIG. 7, wherein one fluid is air, another is a liquid desiccant or water behind a thin membrane and the third is a heat transfer fluid and the air and heat transfer fluid are in a vertical, counter flow direction.
FIG. 13A illustrates an exploded view of an alternate 3-fluid path membrane module 2-plate pair structure, wherein one fluid is air, another is a liquid desiccant or water behind a thin membrane and the third is a humidified scavenger air stream in a cross flow direction to the other air stream.
FIG. 13B shows cross sectional view of the bottom portion of plate 301 from FIG. 13A.
FIG. 13C shows a close-up section of the plate/membrane area of the plate 301 from FIG. 13B.
FIG. 13D illustrates a cross-section of an assembly of two of the plates 301 of FIG. 13A.
FIG. 13E shows a close-up cross section of the plate assembly of FIG. 13D and illustrating where condensation can occur.
FIG. 13F shows an alternate embodiment of FIG. 13E designed to prevent condensation using a thermoformed part.
FIG. 13G illustrates jet another embodiment of FIG. 13E also designed to prevent condensation using an injection molded core.
FIG. 14 illustrates an exploded view of an alternate 3-fluid path membrane module 2-plate pair structure, wherein one fluid is secondary air stream, another is a liquid desiccant or (sea)water behind a thin membrane and the third is a primary dry air stream in a cross flow direction to the other air stream.
FIG. 15 illustrates an frontal aspect of an alternate 3-fluid path membrane module, wherein one fluid is a primary air stream, another is a liquid desiccant or (sea)water behind a thin membrane and the third is a secondary air stream exposed to the liquid desiccant or (sea)water in a counter flow direction to the primary air stream.
FIG. 16 illustrates an rear aspect of the plate structure of FIG. 15 showing the primary air channel and desiccant or (sea)water distribution and collection system.
FIG. 17A shows a frontal aspect of a 4-fluid path membrane module plate structure wherein a primary air stream is exposed to a liquid desiccant or (sea)water behind a thin membrane and wherein a second liquid (desiccant or (sea)water) is exposed to a secondary air stream on the rear of the plate and in counter flow to the primary air stream.
FIG. 17B shows the same frontal aspect of the plate structure of FIG. 17A with the air turbulating structure removed.
FIG. 17C shows the same frontal aspect of the plate structure of FIG. 17A with the air turbulating structure and membrane removed.
FIG. 17D shows a rear aspect of the plate structure of FIG. 17A illustrating how the secondary air stream is directed to be in counter flow to the primary air stream.
FIG. 18A shows a frontal aspect of a plate structure that utilizes 2 sections for dehumidifying or cooling a primary air stream. In the first section cooling and dehumidification take place and an active section uses a micro-porous membrane and in the second section primarily cooling takes place using a thin non-porous film to cool the air stream as well as a desiccant material.
FIG. 18B shows a rear aspect of a plate structure of FIG. 18A that utilizes 2 sections for cooling of the front aspect. In the one section cooling is achieved by siphoning some primary air from the front aspect and in the other section cooling is achieved by utilizing a secondary air stream. Both air streams are mostly in counter flow to the primary air stream.
FIG. 18C shows the frontal aspect of the plate structure of FIG. 18A with a desiccant path and an evaporating water path both starting in the second section and being brought back to a first section of the plate.
FIG. 19 illustrates a thermoformed plate structure to function as a heat exchanger between to fluids, primarily liquids.
FIG. 20A illustrates an alternate embodiment of a thermoformed plate heat exchanger wherein two halves are formed in a single plate.
FIG. 20B shows the plate structure or FIG. 20A being folded into a plate-pair structure.
FIG. 21 illustrates the forming of a second liquid channel in the plate structure of FIG. 20B by using an adhesive.

### DETAILED DESCRIPTION

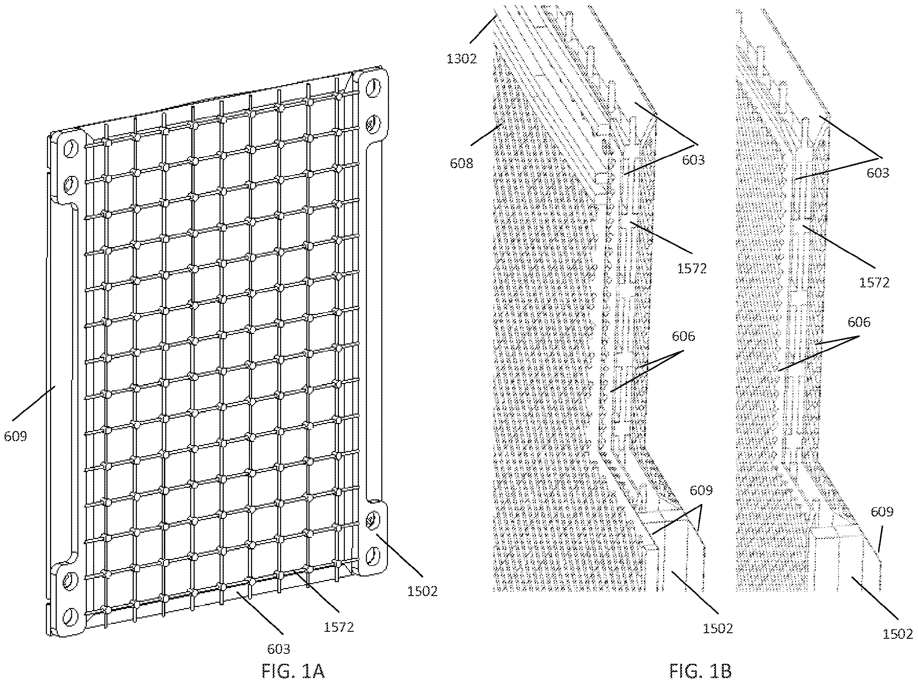

FIG. 1 illustrates a 3-fluid plate structure wherein the first fluid is directed vertically through a netting 1572 along a membrane surface 603. A liquid desiccant is directed behind the membrane 603 into a thin netting 606, which functions to set the distance and distribute the liquid desiccant over the surface of the support plates 609. The support plates 609 are mounted to form a water channel with a water netting 608. The water netting 608 also functions to distribute the water evenly between the two plates 609 and to keep the two plates 609 at uniform differences. The water channel is typically kept under a negative pressure with respect to atmosphere and the water netting serves to keep the plates 609 flat under that negative pressure. Likewise the desiccant is usually meant to siphon through the netting 606 and thus the netting 606 also functions to keep the desiccant channel at a fixed uniform distance from the support plate. An additional benefit of having negative pressure with regards to atmosphere in both the desiccant channel and water channel is that any leaks occurring in the membrane 603 or seals 1302 will result in air going into the desiccant or water, rather than desiccant or water leaking out of the plate structure. This makes the system inherently safe for liquid losses.

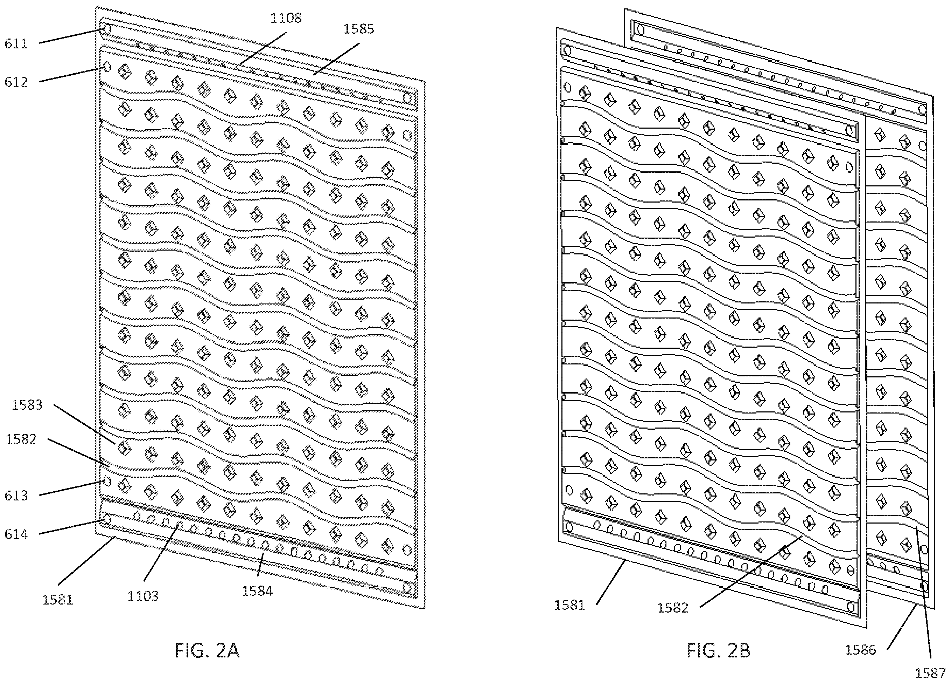

FIG. 2 illustrates an alternate embodiment, wherein the support plates 1581, water channel netting 1582 and desiccant netting 1583 have been (thermo) formed into the support plate structure itself. Two plates 1581 can be heat bonded together to form a membrane plate structure and multiple membrane plate structures can be joined with the seal structures into a membrane module. Although the structure can be made to work, an alternate embodiment would be to thermoform the air channel structure instead of the water channel structure. There are three main advantages of this approach: first, thermoforming the air channel structure allows one to reduce the number of water seals dramatically as shall be illustrated later, because each water seal from the can be formed into the support plates. Second, the membrane attachment is easier and the membrane can be kept flat rather than having to conform to the deeper grooves shown in FIG. 2. Third, the remaining parts of the water channel such as the water netting can still be formed in the thermoform if desired and plates can be assembled with many different flow structures as will be demonstrated.

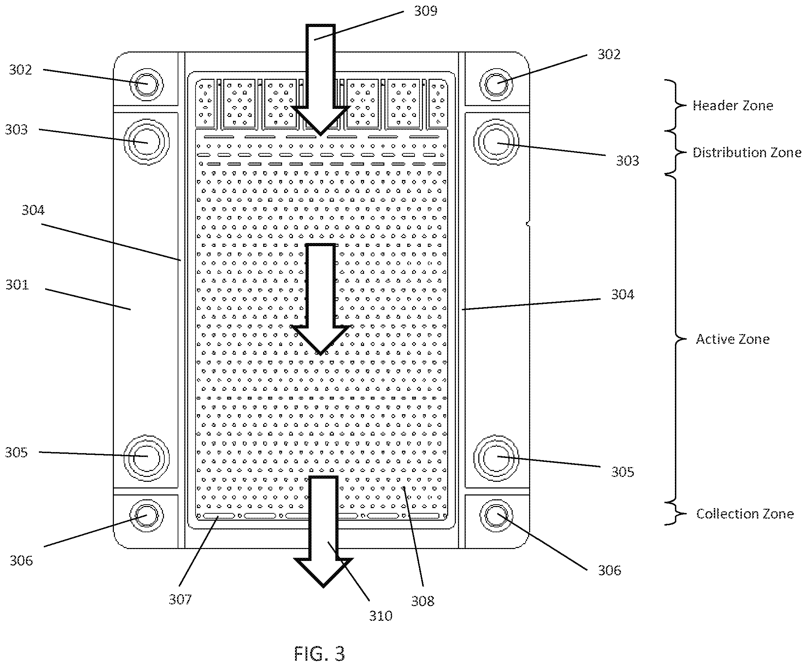

FIG. 3 illustrates a front aspect of a thermoformed three-fluid plate structure wherein the entering air stream 309 is in a primarily vertical orientation. The formed plate 301 contains features for air and water distribution some of those will be illustrated in later figures. The formed plate is usually manufactured from a common plastic material like (Recycled) Poly Ethylene Terephthalate ((R)PET), Poly-Propylene (PP), Poly Ethylene (PE), (High Impact) Poly Styrene ((HI)PS), Acrylonitrile Butadiene Styrene (ABS), Poly Carbonate (PC) or other suitable plastic. It is possible to cover the plastic material with an adhesive layer to help adhesion of other components or to use a flocked coating or other hydrophilic coating to help distribute liquids over the surface. Flocked coatings are usually made with hydrophilic materials such as Nylon or Rayon chopped strands and is readily applied to the plate materials.

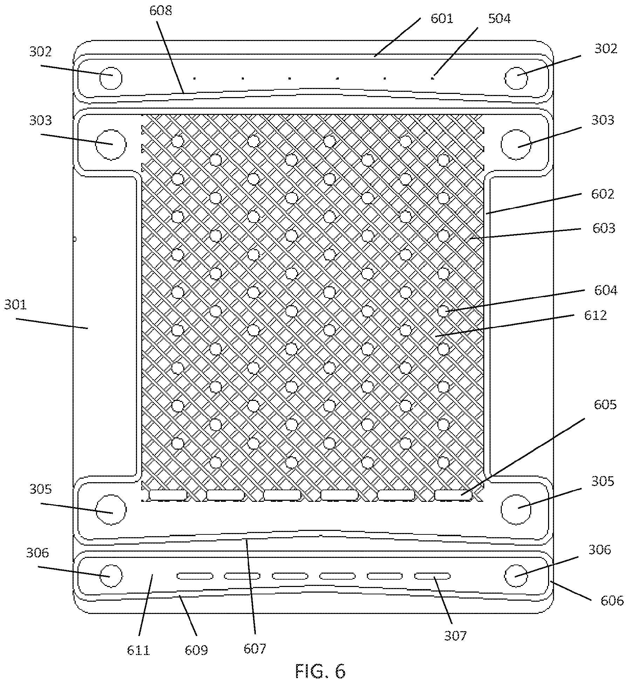

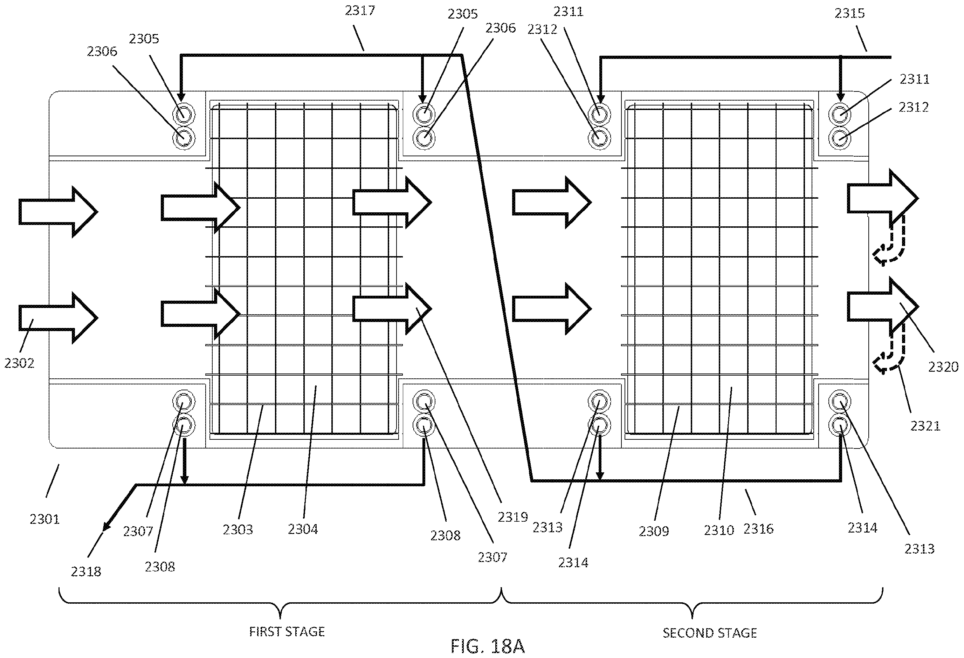

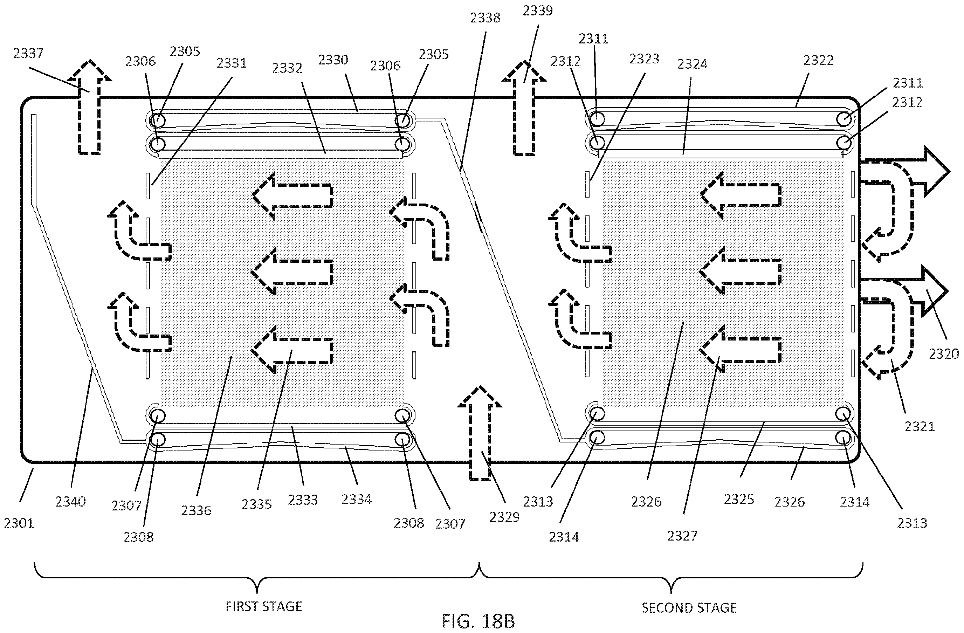

Liquid desiccant supply ports 302 (using an adhesive channel, which will be shown in FIG. 6), function to direct liquid desiccant (or other liquids such as water or seawater) towards a header zone. The liquid desiccant is then directed to a distribution zone, which ensures that the desiccant is distributed evenly across the plate 301. The active zone comprises small dots 308 made using either an adhesive or formed right into the plate and heat bonded or ultrasonically welded to an optional membrane. The dots 308 function to hold the membrane flat and also continue to distribute the desiccant ensuring an even, slow vertical drop of desiccant. The dots are normally about 2-3mm in diameter and spaced 7-8mm apart in such a way that less than 10-15% of the active area is used up by the glue dots. It is of course desirable to keep the dots to a minimum to ensure the largest active area. The falling desiccant film eventually reaches a collection zone containing a number of exit slots 307, which bring the liquid desiccant to a set of drain ports 306. It would be possible to not use a membrane on the surface, and to rely on the flocking material for distribution. The membrane can be a microporous membrane permeable to gaseous molecules such as the Celgard EZ9020 membrane made by Celgard LLC, 13800 South Lakes Drive, Charlotte, SC 28273. However the membrane can also be a non-porous membrane such as a sheet of thin plastic if a sensible only contact is desired such as will be shown in FIG. 18A and FIG. 18B.

The entering air 309 is exposed to the layer of desiccant running between the dots 308 and is be humidified and warmed or dehumidified and cooled as determined by the desiccant temperature and concentration. The leaving air 310 has reached some level of equilibrium with the liquid desiccant usually assuming a temperature close to the temperature of the desiccant and a relative humidity matching the desiccant concentration.

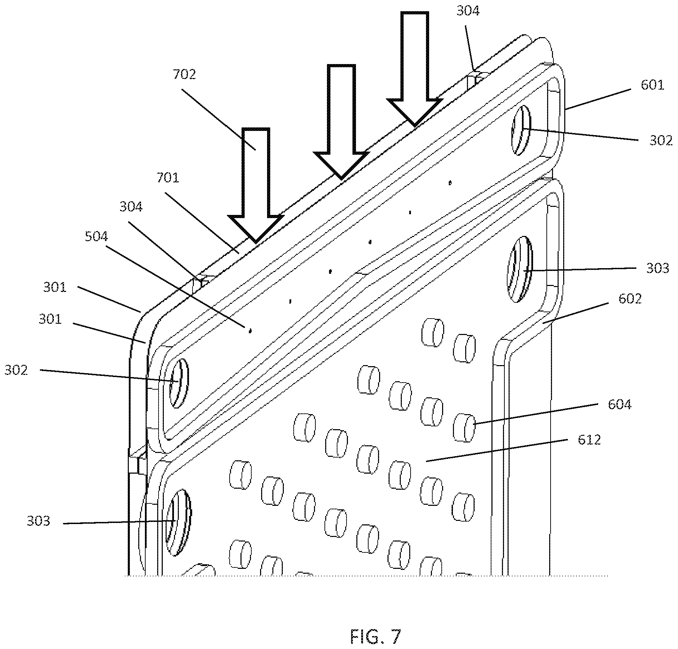

The air stream 309 is constrained on the sides by a formed ridge 304, which serves to form the channel. The ridge 304 sets the edge of the channel the height of the ridge (typically 1-3mm) sets half the height of the air channel when two of the plates 301 are mounted together as will be shown in FIG. 7. A set of supply ports 305 and drain ports 303 for a secondary fluid such as a heat transfer fluid are added to the plate 301 to provide a thermal sink or source for the desiccant. If the inlet air stream is hot and humid, the desiccant film on the surface of the plate 301 will absorb significant amounts of sensible and latent heat, which is then thermally conducted through the plate in the heat transfer fluid on the rear of the plate structure as will be shown in FIG. 6. It is of course also possible to run the inlet air stream from the bottom up, in which case the function of the supply port 305 and drain port 303 is reversed as well to maintain a counter flow between the air stream 309 and the heat transfer fluid on the rear of the plate. Because the membrane is very thin it is generally not possible to flow the desiccant other than by gravity in a vertical direction. But since the amount of desiccant mass flow can be significantly lower than that of the air flow 309 or the heat transfer fluid mass flow on the rear of the plate, the impact on the heat and mass exchange not being in perfect counter flow is relatively small.

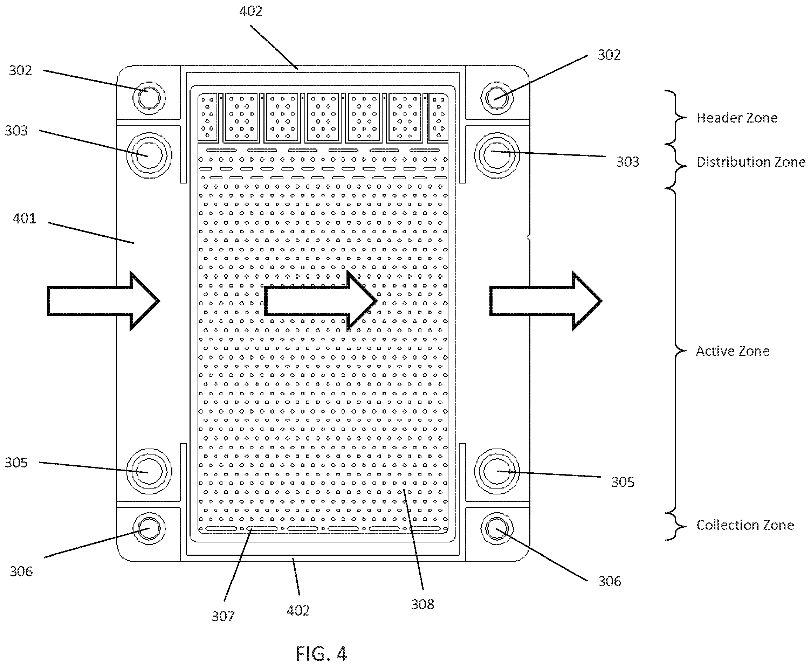

FIG. 4 then, shows a modified version of the 3-fluid thermoformed plate of FIG. 3 wherein the thermoform mold has been modified so that the entering air stream 403 is primarily horizontal by removing a section of the side wall 304 in FIG. 3. Two small sections of wall 402 have to be added to define a horizontal air channel. The plate 401 can be made in the same thermoform mold as the plate 301 from FIG. 3 by using a couple of inserts in the mold. In air treatment systems a horizontal air flow is often desirable since it packages more easily in an air conditioning system.

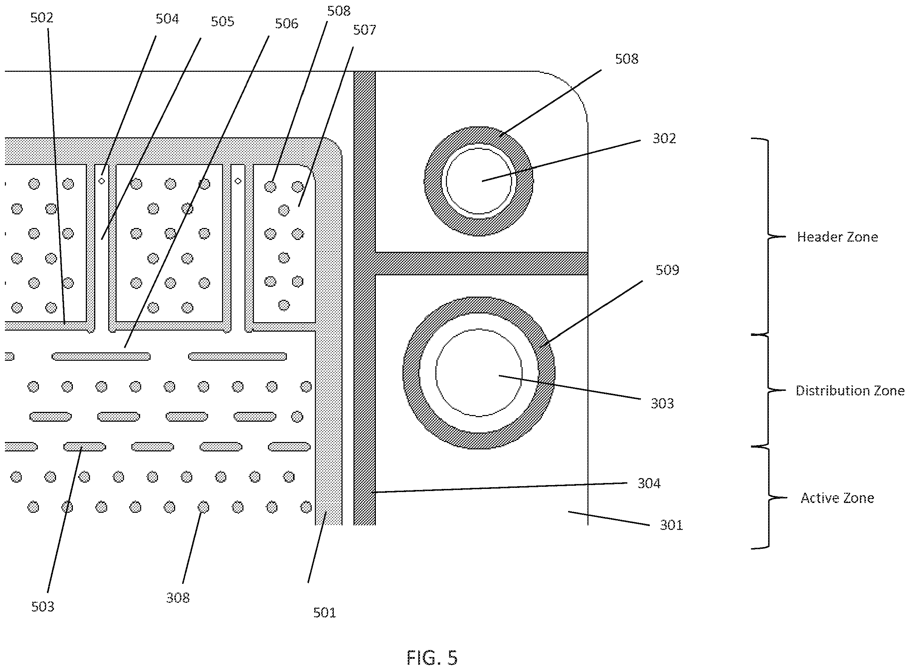

FIG. 5 shows a close-up view of the top right corner of the thermo formed plate of FIG. 3. The desiccant supply port 302 is surrounded by a protrusion 508 that forms a section of the desiccant supply channel. Similarly the heat transfer fluid drain hole 303 is surrounded by a protrusion 509 that form a section of the heat transfer fluid supply channel. The protrusions 508 and 509 and the edge of the air channel 304 are about 1.5 to 2.0mm high above the surface of the plate 301. On the rear of the panel (which will be shown in FIG. 6) a channel allows the desiccant to flow from the supply port 302 to the small exit holes 504. These exit holes are small about 1-2mm in diameter and spaced about 20-30mm apart to ensure uniform desiccant distribution across the panel. However, at the desired low flow rates, the desiccant has a tendency to exit from the holes 504 closest to the supply port 302 and not get distributed to the holes 504 near the middle of the plate. Therefor desiccant exit channels 505 are formed where the desiccant first runs out of the holes 504. These channels are about 1-2mm wide and about 0.25mm high (the heights of the thermoformed features 501, 502, 503, 504 and 506 are all the same at about 0.25mm) and function as a slight flow resistance to the desiccant leaving the holes 504. This increase in flow resistance cause the desiccant in the channel 610 in FIG. 6 to become slightly pressurized (ideally about 500 to 2,000 Pa), which in turn ensures that all holes 504 get the same amount of desiccant flow. Furthermore, the higher pressure in the channel 610 also ensures that other plates in the membrane module get the proper amount of desiccant flow and uniform desiccant distribution is attained.

As the desiccant exits the channel 505, the desiccant runs into an obstruction 506 that splits the desiccant stream in two. A section of line and dot patterns 503 ensures that the desiccant gets split up further and eventually streams uniformly through the active area and the dots 308. However, the flow resistance that is created by the distribution zone features, results in the desiccant trying to back up into the inactive zones 507. This is undesirable because the inactive area typically is not cooled and therefor the desiccant can get warm quickly. The blocking lines 502 prevent desiccant from entering the inactive zones 507. Some additional dots 508 ensure that any membranes remain flat over the inactive zone.

A main desiccant seal 501 is where a membrane can be attached by means of heat bonding, adhesive bonding or microwave, ultrasonic or other bonding methods. The mean seal 501 is continuous and around the entire desiccant zone ensuring that no desiccant can escape into the air stream 309.

FIG. 6 shows the rear side the plate 301 of FIG. 3. The desiccant supply ports 302 are where a liquid desiccant will enter a supply channel 610. The edges of the supply channel 601 can be formed by several methods but one convenient method is to form them with an adhesive such as 3M 550 or 5200 PolyUrethane using a gluing robot system. The desiccant exits through the holes 504 to the opposite (front) side of the plate as was shown in FIG. 3 and FIG. 4. The use of an adhesive robot allows the bottom 608 of the supply channel to be formed in such a way that the desiccant with automatically drain from the panel when is stops being supplied. At the bottom of the plate the desiccant drains through holes 307 from the front into the drain channel 611. The drain channel 611 can also be formed like the supply channel using an adhesive and like the supply channel the seal edge 606 can be sloped in the bottom 609 to let desiccant automatically drain out when the flow ceases. The desiccant will eventually drain out of the ports 306.

Also seen in FIG. 6 is the heat transfer fluid channel 612. The edges 602 of the heat transfer fluid channel 612 are formed by the same adhesive as the desiccant channels 610 and 611 and can be sloped at the bottom 607 as well for draining of the heat transfer fluid. The fluid enters through ports 305 and uniformity is ensured by some entrance obstructions 605 that can be formed by short adhesive lines or dots to create a small amount of pressure drop. A water netting 603 as in FIG. 1 is used to space the various plates 301 and to ensure uniform fluid distribution. Adhesive dots 604 ensure that there is some structural integrity of the plate structures in case a positive fluid pressure is applied (in normal operation the fluid pressure is best held negative to atmosphere but during startup or standby pressures can be positive). The heat transfer fluid runs up in the channel 612 and eventually exits through the drain holes 303.

FIG. 7 shows a two-plate structure combining two of the plates 301. The air channel edges 304 are heat bonded or adhesive bonded to each other thereby forming the air channel 701 and air 702 can enter the space between the two plates 301. If membranes are used on the plates 301, those would be applied prior to bonding the two plates 301 together. The protrusions 508 and 509 are also bonded together at the same time as the air channel edges 304 (not shown in the figure), thereby forming a short section of heat transfer and desiccant channel. The adhesive lines 601 and 602 are subsequently applied. The glue dots 604 are placed (the water netting 603 is then place but is not shown in the figure). While the adhesive is still uncured a next two-plate structure can be placed on the adhesive lines thereby creating a continuous stack of membrane plates 301.

By repeating the structure of FIG. 7 multiple times, a membrane module comprising many air, desiccant and heat transfer fluid channels can manufactured.

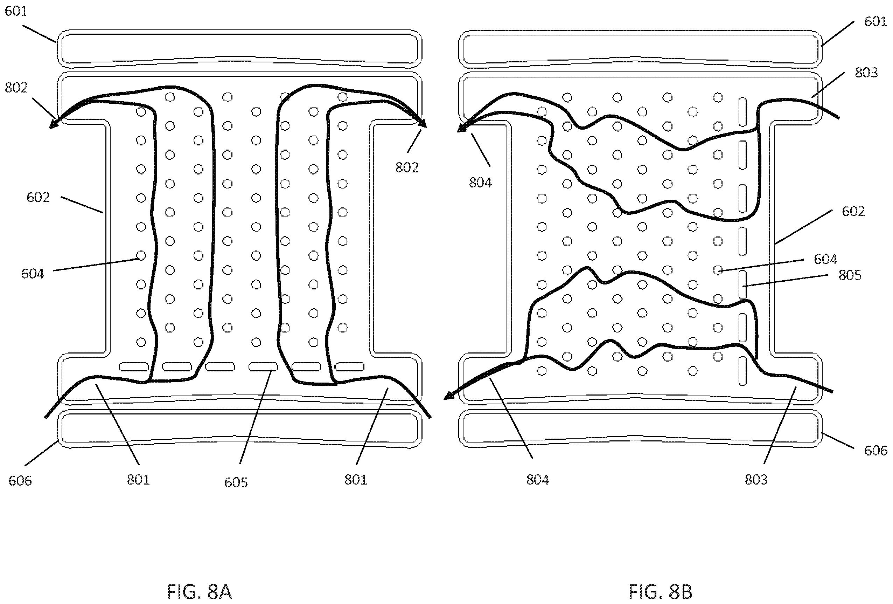

FIG. 8A shows how the heat transfer fluid can be directed by placement of some entrance obstructions 605, the water netting (not shown) and the adhesive dots 604 to ensure uniform fluid distribution. The fluid entering at 801 is directed so as to uniformly flow upwards and drains through the exit locations 802.

FIG. 8B is the pattern of adhesives that would be used on the rear of the panel 401 of FIG. 4. The heat transfer fluid is now meant to flow primarily in a horizontal direction. The heat transfer fluid enters at locations 803 and encounters the adhesive obstructions 805. Again, the water netting (not shown) and the adhesive dots 604 are positioned to ensure uniform fluid distribution. The fluid leaves at locations 804.

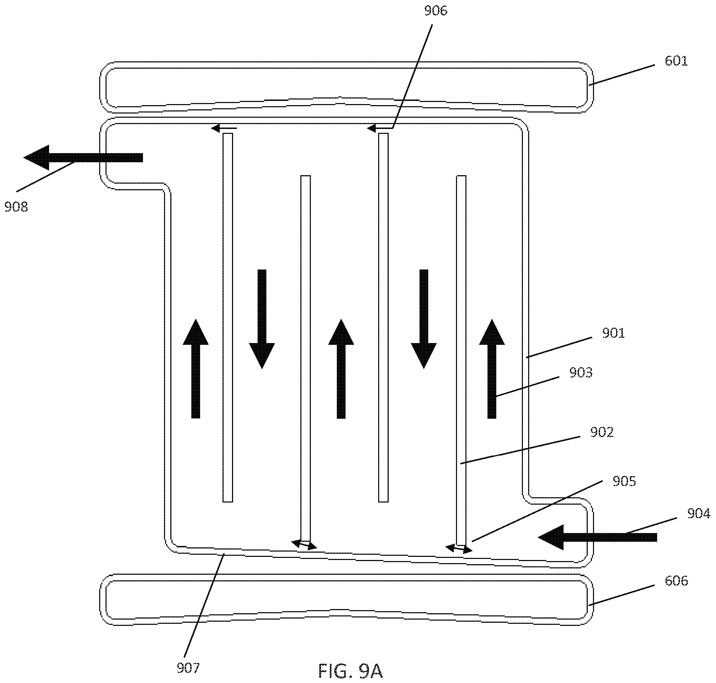

FIG. 9A shows an alternate method of manufacturing the fluid channel on the rear of plates 401. The fluid enters at 904 and is directed at first primarily upward 903 by the obstruction 902. The flow flows primarily downward in the next channel and keeps alternating up and down until reaching the exit 908. The main seal 901 ensures that the heat transfer fluid remains contained. A narrow opening 905 at the bottom of the lower obstructions 902 ensures - in combination with a sloped lower section 907 that the heat transfer fluid can be drained from the channel easily. Similarly a narrow opening at the top 906 of the upper channels ensures that air will not get trapped in the channels when the plate structure is filling with heat transfer fluid.

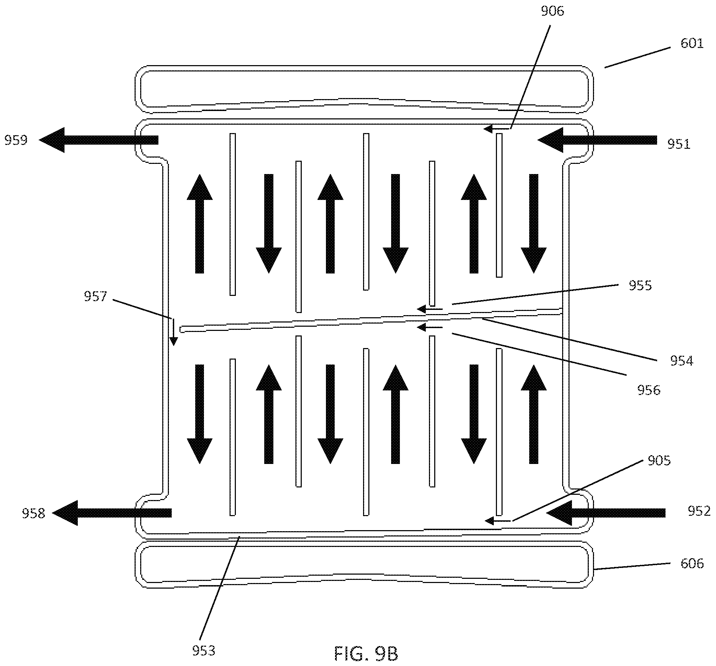

FIG. 9B show an alternate method of directing the water flow on the rear of the plates 401, in a direction generally counter to the air flow on the opposite side. Heat transfer fluid enters at ports 951 and 952 at the same time. This is oftentimes preferable over a single, larger supply line as was shown in FIG. 9A. The heat transfer fluid is then directed towards the middle of the plate, where a larger port allows the heat transfer fluid to flow again towards the top and bottom. This alternating up and down flow pattern has a reduced channel length for each flow path and thus requires less pump power. Furthermore, as was shown in FIG. 9A, the design can be implemented with air escape openings 906 and small drain openings 905. These can be replicated in the center of the plate with air escape channels 956 and drain channels 955. Furthermore, to prevent a fluid pocket in the last section of the top channel, a drain 957 can be easily added. The heat transfer fluid ultimately exits at drains 958 and 959. This configuration allows for the same fluid connections as were shown for the vertical fluid flow path in FIG. 8A.

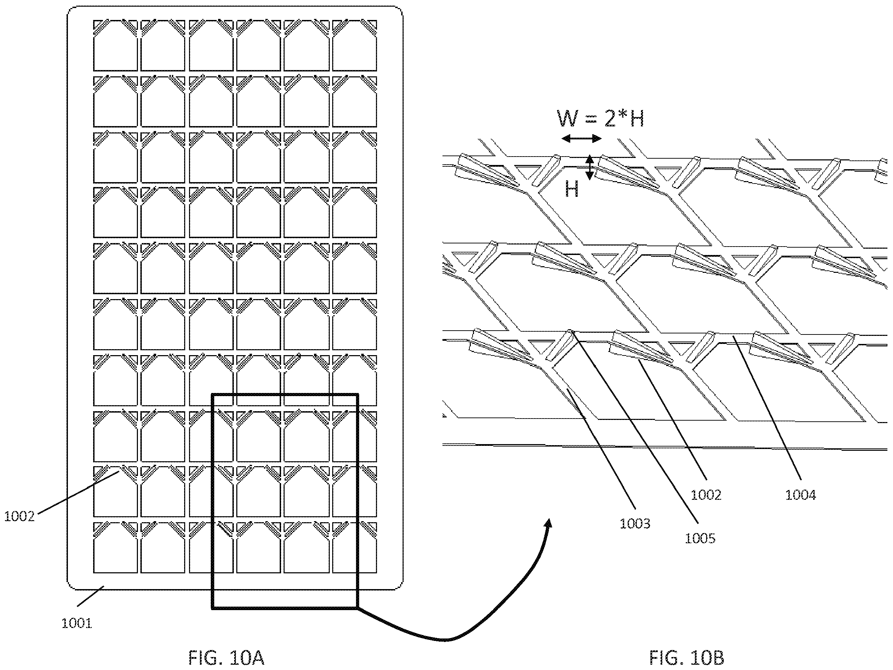

FIG. 10A illustrates an air turbulator plate that is formed in a thermoforming process or an injection molding process. The main edge structure 1001 is sized so that it has the same dimensions as the height and width of the air channel 701 in FIG. 7. The small turbulators 1002 are aligned so that the heat and mass transfer between the air stream and the desiccant stream are maximized while minimizing the resulting pressure drop.

FIG. 10B illustrates a close up view of a section of the air turbulator of FIG. 10A. Small strips of plastic material 1003 and 1004 connect the turbulators 1002 together. Each turbulator has a small flat section 1005 that ensures that the turbulator remains in place and cannot vibrate against the membrane, which could potentially damage the membrane. Furthermore the height H of each turbulator is set to be equal to the air gap 701 in FIG. 7. The distance W between turbulators is typically picked to be twice the height H.

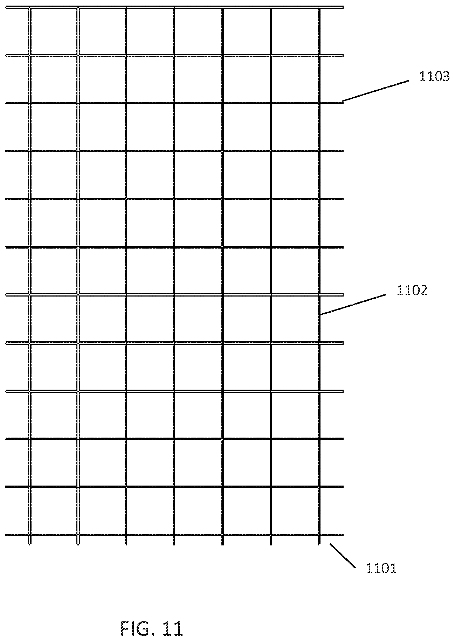

FIG. 11 illustrates an alternative air turbulator 1101 manufactured using an extrusion die and is commonly available from various manufacturers for example from black poly-propylene OB1200 netting made by Industrial Netting, 7681 Setzler Pkwy N. Minneapolis, MN 55445, USA. Horizontal plastic strands 1102 and vertical strands 1103 function to create a turbulent effect, which enhances the heat and mass transfer in the channels and do so very cost effectively.

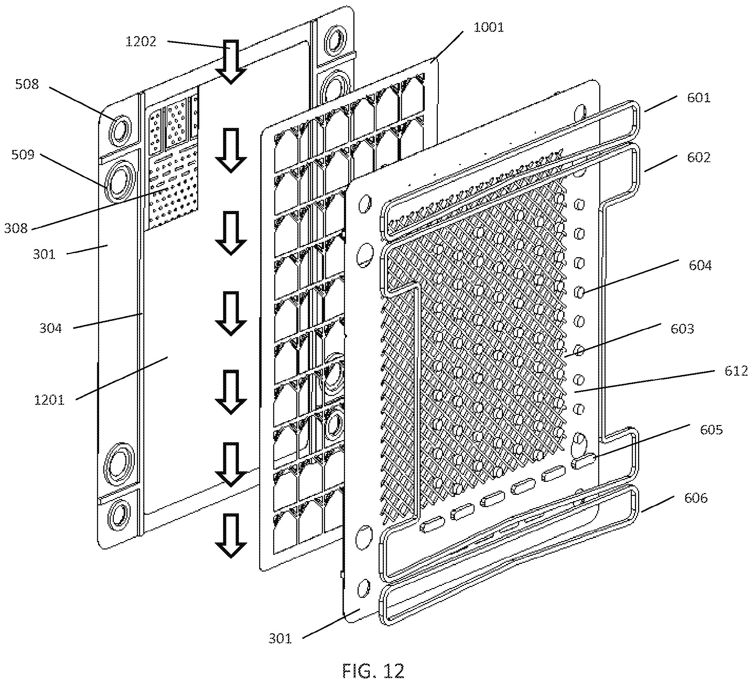

FIG. 12 shows an "exploded" view of the complete 2-plate structure as it has been discussed so far. A first thermoformed plate 301 has a membrane 1201 attached a corner of which has been removed to show the upper left corner of the plate 301. A vertical air flow 1202 is directed downward over the surface of the membrane 1201. An air turbulator 1001 is then adhesive or preferably heat bonded to the air channel edges 304. A second plate 301 is than bonded to the air turbulator 1001 at the same time. A gluing robot then applies desiccant lines 601 and 606 and water channel lines 602, adhesive dots 604 and obstructions 605. A water net 603 can be added or water net features could be integrated to the rear of the plates 301 as discussed earlier.

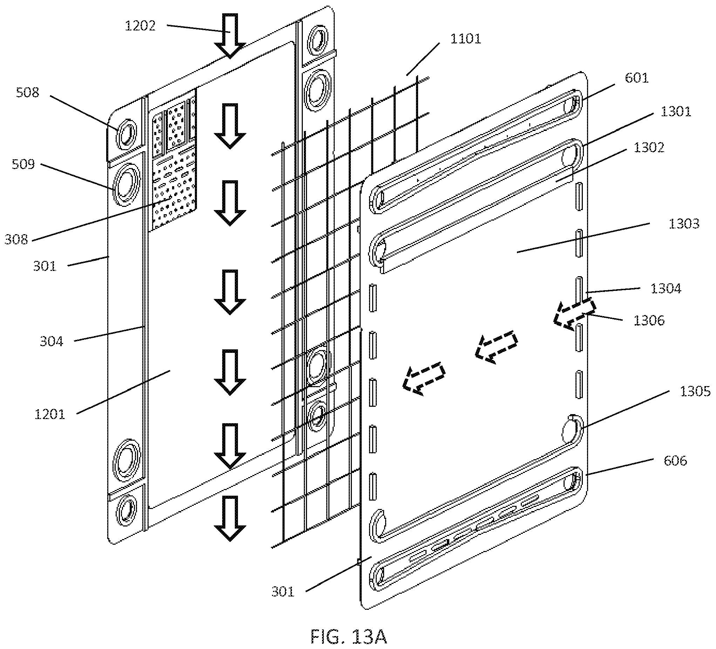

FIG. 13A illustrates an alternative construction of the two-plate structure wherein the turbulator 1001 is replaced by the turbulator 1101 and the heat transfer fluid channel 612 is replaced by a secondary air stream 1306. The secondary air stream can be used to provide indirect evaporative cooling for the primary air stream through the plate 301. In the implementation of FIG. 13A the secondary air stream is primarily in cross flow to the primary air stream. The secondary air stream enters the rear of the plate 301 through obstructions 1304 meant to ensure uniform air flow across the surface 1303. The (evaporative) water inlet channel 1301 is now designed to provide wetting to a wicking material 1302, which in turn provides water to a wetted surface 1303 to the rear of the plate 301. The wicking material can be any convenient material that evenly distributes water such as a cotton or rayon material. The wetted surface 1303 is preferably a flocked surface or similar evenly spreading material to ensure even water distribution. Any water that has not evaporated on the surface 1303 is collected by the collector 1305 and drained off for potential reuse or discard. Evaporative cooling that is achieved in the air 1306 is only able to reach the wet-bulb temperature of the air stream 1306, which means that the air stream 1202 can only be cooled to that same temperature. As we shall see, that may necessitate the addition of a secondary cooling stage.

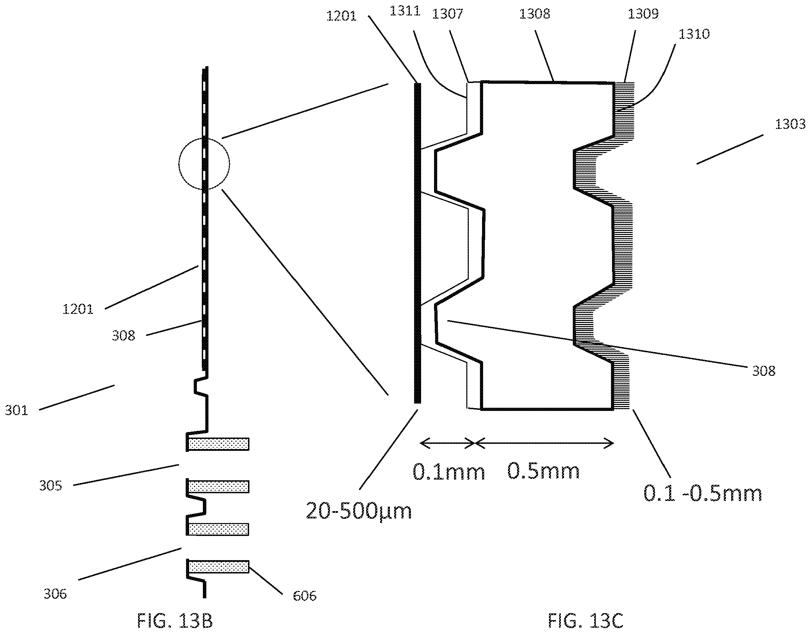

FIG. 13B shows a cross sectional view of the plate 301 from FIG. 13A. As discussed before the membrane 1201 is attached to the dots 308. The drain ports 305 and 306 for the water or desiccant respectively and the adhesive seal 606 on the rear of the plate are shown again.

FIG. 13C shows a close-up cross-section of the membrane 1201 and dot 308 areas. The membrane 1201 can be adhesive bonded to the top of the dots 308 with a convenient adhesive such as a hot melt, polyurethane or silicone adhesive. However, it is also desirable to have no adhesives since some adhesives can have difficulty sticking to the membrane or can damage the membrane because of the presence of solvents in the adhesive. An alternate manufacturing method works as follows: the base support plate 1308 can be thermoformed using conventional methods but already contains a very thin adhered "cap" layer usually made with polyethylene, acrylic or ASA (Acrylonirtrile Styrene Acrylic Ester) 1307. The cap layer can now be heat bonded to the membrane: a low amount of heat is applied, which melts the cap layer resulting in a strong bond between the membrane and the cap layer/base material structure. However, the cap layer material is usually low in surface energy, making the material fairly hydrophobic and resulting in poor desiccant distribution between the dots 308. A corona treatment of surface 1311 increases the surface energy and results in a much better desiccant uniformity. Conversely the rear 1303 of the plate 301 can be corona treated as well on surface 1310. This is useful if the adhesive seal 606 is not easily bonded to the base material 1308 and will also enhance liquid distribution. Alternatively if the rear surface 1303 is meant to evaporate water, a wicking surface such as a nylon or rayon flocking 1309 can be employed.

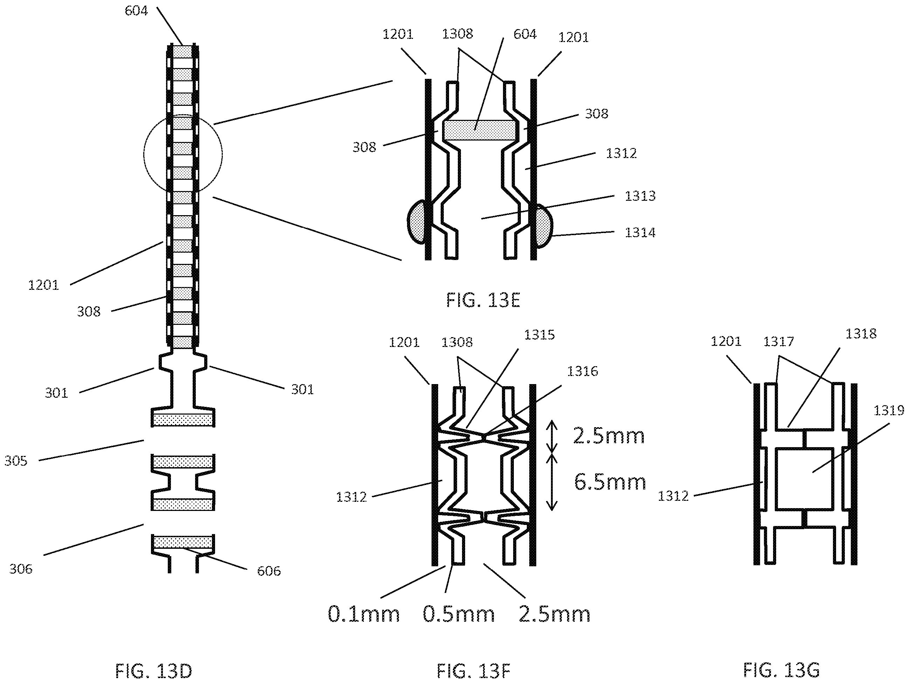

FIG. 13D illustrates part of an assembly of two of the plates 301 of FIG. 13A with an adhesive seal edge 606 for the liquid desiccant drain channel and adhesive dots 604 formed to connect the two plates 301 as described earlier. As shown earlier, the plates 301 have been formed to accept a membrane 1201, which is held by dots 308.

FIG. 13E shows an enlarged section of the structure of FIG. 13D. The base material 1308 is connected to the membrane 1201. The area 1312 where liquid desiccant flows between the base material 1308 and the membrane 1201 is formed around the dots 308 as discussed earlier. However, depending on the location of the adhesive dots 604, condensation 1314 can form on the membrane surface. If the heat transfer fluid is flowing behind the thermoformed dots indicated by label 1313 in the figure, then the cooler heat transfer fluid can result in condensation on the membrane surface if the humidity in the air stream is high and the desiccant concentration is low. In locations where the adhesive dots 604 are aligned with the dots 308, the onset of condensation is at much lower temperatures. In order to help prevent condensation, an adhesive dot 604 may be placed behind each thermoformed dot 308, but in practice that is hard to accomplish with an adhesive robot because of the sheer number of dots (several thousand per plate). Condensation will typically not occur on the membrane itself unless the desiccant is very dilute. Several other solutions are possible as will be shown in FIG. 13F and FIG. 13G.

FIG. 13F shows an alternative way to thermoform the dots 308 from FIG. 13E. The center 1315 of the dots is formed backwards to create a support structure that contacts the opposite side 1316. The advantage of this approach is that the adhesive dots 604 can be mostly eliminated. The netting 612 in FIG. 6 is also superseded by the structures 1315 and 1316 and is thus also eliminated. Furthermore, the lack of liquid heat transfer fluid behind the dots results in a warmer surface and thus in less risk of condensation.

FIG. 13G illustrates another solution using an injection molded structure 1317 that has molded supports 1318 thereby forming a channel 1319 for the heat transfer fluid. The lower thermal conductivity of the plastic results in warmer membrane areas underneath the contact points to the membrane and thus less chance of condensation.

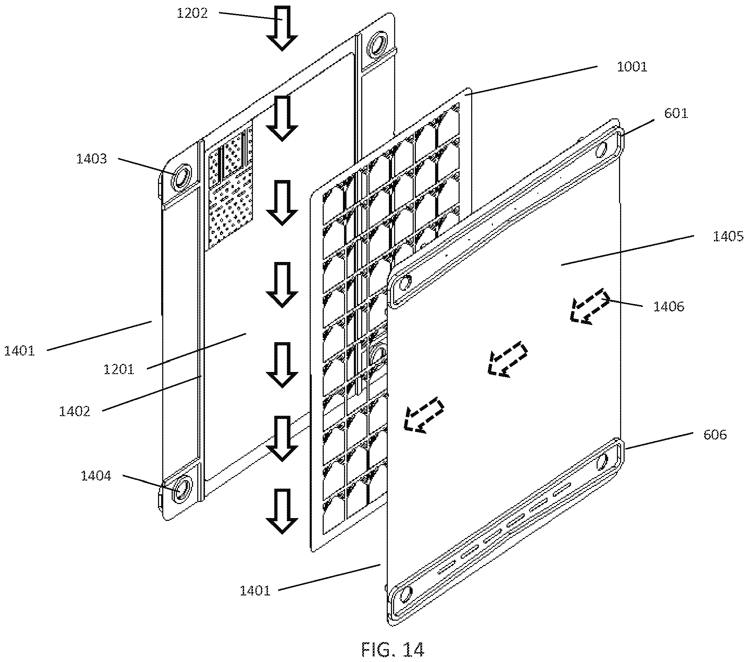

FIG. 14 now illustrates a different construction of the plate structure of FIG. 12 and 13A wherein the heat-transfer channel 612 or indirect evaporative channels 1303 have been eliminated entirely. That means that the plate 1401 is a modified version of plate 301 wherein the ports and protrusions associated with the second liquid have all been removed. The desiccant supply port 1403 and drain port 1403 are the only ports still needed. The air channel edge protrusion 1402 is essentially unchanged from the formed ridge 304 in FIG. 3. The rear of the plate 1405 now becomes very simple and the only adhesive lines needed are the lines for the desiccant distribution 601 and drainage 606. The air stream 1406 can now be considered the primary air stream and the air stream 1202 can now be considered a secondary air stream. The liquid distributed through ports 1403 can now be seawater or waste water and the optional membrane 1201 is now used to prevent and salt from exiting the seawater, which of course reduces the risk of corrosion and carry-over of salt particles from that sea water. The system of FIG. 14 in effect becomes an indirect, cross-flow, evaporator with a membrane protecting the evaporation liquid (seawater).

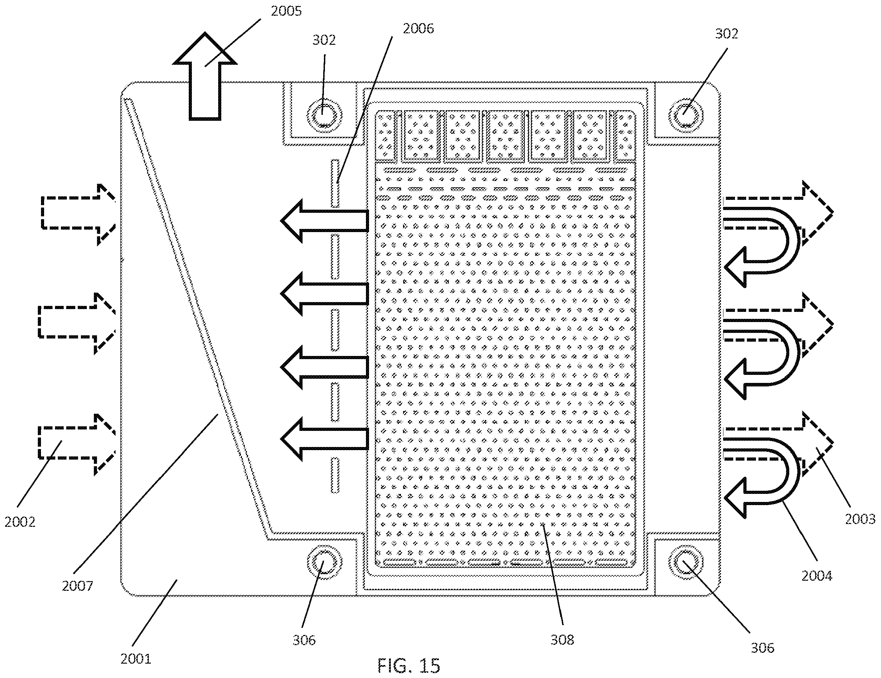

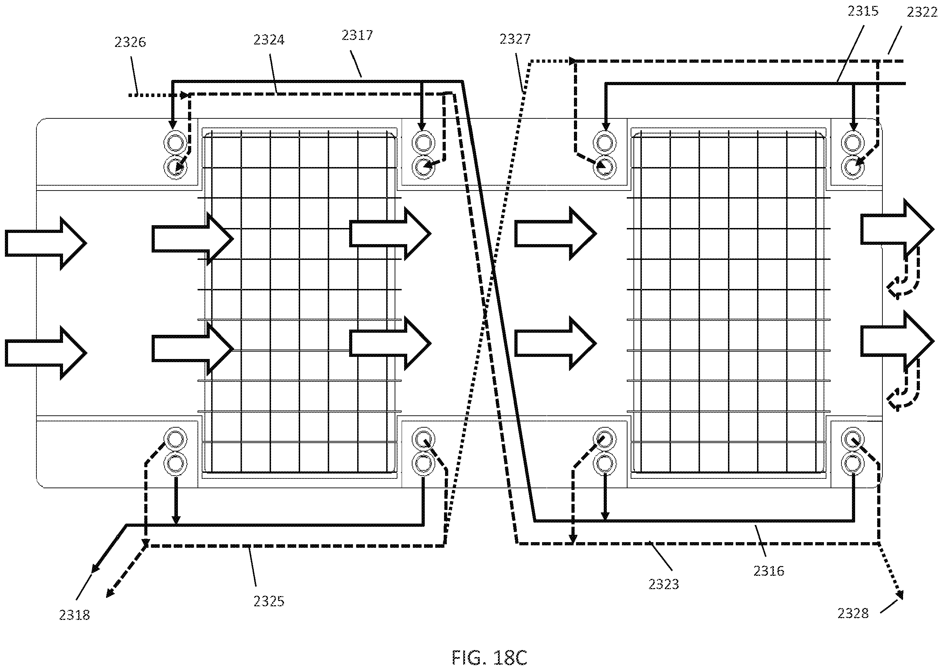

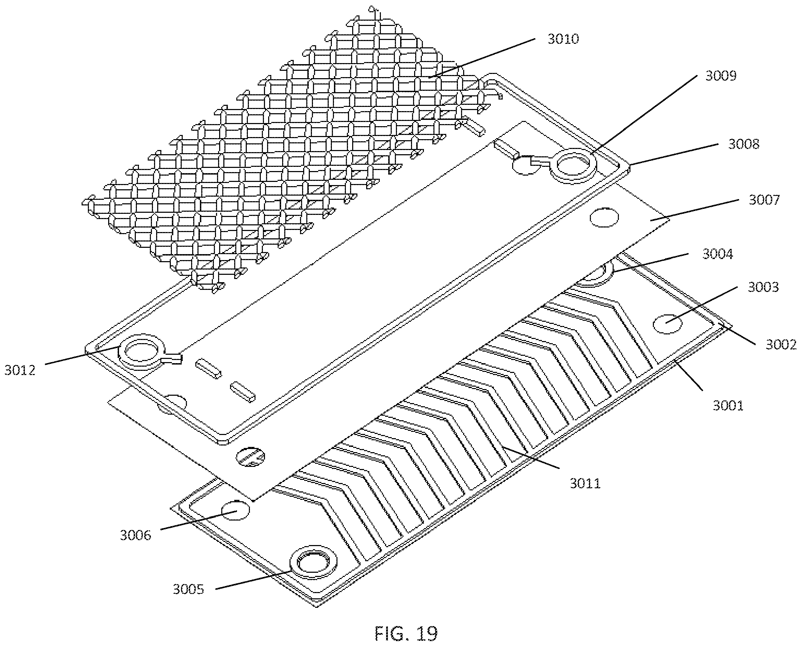

FIG. 15 shows a way to convert the cross flow air stream orientation - which is less effective than a counter flow air stream orientation. As described in Kozubal FIG. 18 and FIG. 19 (US 2013/0340449), it is sometimes beneficial to dehumidify an air stream -while minimizing its temperate rise in a first stage, and then to further cool such an air stream in a second stage using an indirect evaporator and siphoning off some of the dry air to allow the indirect evaporator achieve a much lower final air temperature. A primary air stream 2002 is directed along the rear of a thermoformed plate similar to the one from FIG. 14. As the air 2003 exits at rear channel a small amount of air 2004 (usually not more than 25-30%) is siphoned off and directed along the front of the plate where is eventually exits as exhaust air stream 2005. The plate 2001 has a thermoformed obstruction 2007 that diverts the air stream sideways and exit obstructions 2006 are formed in such a way the air flow across the active zone is uniform. Liquid supply ports 302 can now be used as before to bring a water or seawater stream over the active zone, which can be optionally covered by a membrane. Drain ports 306 function as before in FIG. 14. The structure of FIG. 15 create a cross flow indirect evaporative cooler.

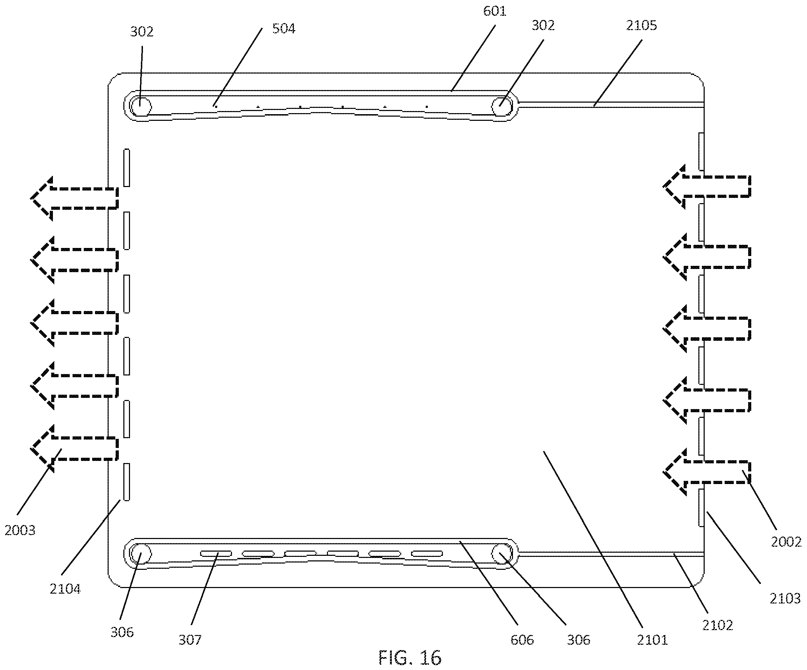

FIG. 16 shows the rear channel of FIG. 15, wherein the inlet air stream 2002 can be directed through some optional inlet ports 2103 along the rear surface 2101. Optional exit ports 2104 are used to ensure uniform air flow patterns and the exit air stream 2003 can be partially siphoned to the front of the panel as discussed above. The adhesive liquid inlet channel 601 around the supply ports 302 is as before directing liquid to the front of the plate through ports 504. However an additional line of adhesive 2105 can be added to serve to contain the air stream 2002. Likewise the drain channel 606 around the drain ports 306 and 307, has an extended adhesive line 2102 to contain the air stream 2002.

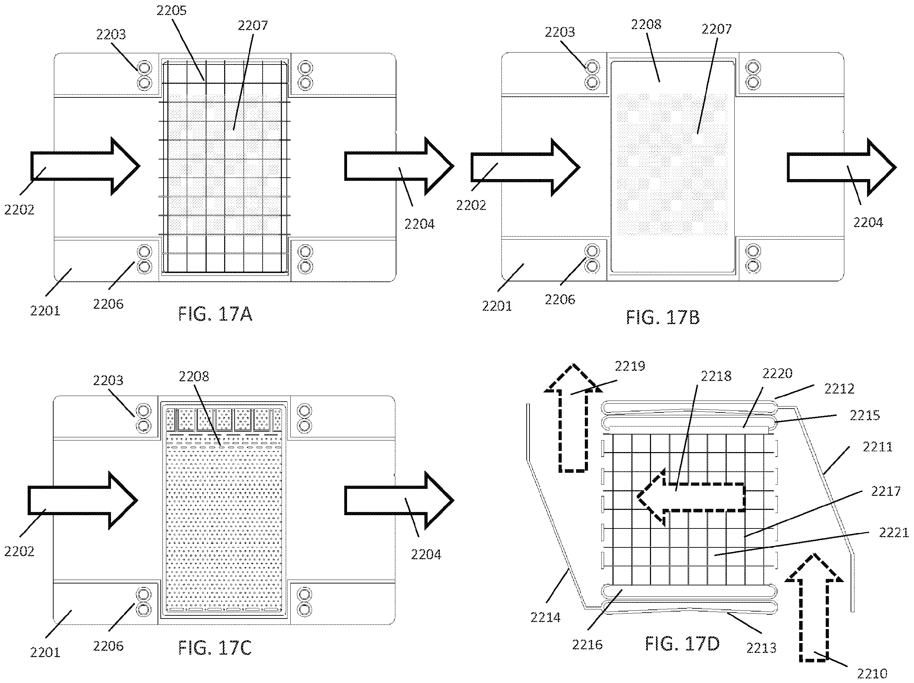

FIG. 17A illustrates how the an additional liquid can be added to the structure of FIG. 16 and how the plate structure 2201 can be modified to use a completely separate secondary air stream, rather than siphoning some of the air from the rear side. The air stream 2202 is directed over a short inactive area before reaching the active zone 2207 underneath air turbulator netting 2205. Dual supply ports 2203 are formed into the plate as before in FIG. 3 ports 302 and 303. However, since the flow rates will be different, the ports can be sized differently from FIG. 3. Similarly drain ports 2206 can be formed like ports 305 and 306 in FIG. 3. The leaving air 2204 has now been treated in the active zone.

FIG. 17B shows the same plate of FIG. 17A with the air netting 2205 removed. The active zone 2207 can be covered by a membrane 2208.

FIG. 17C shows the plate structure 2201 without any additional components as it would come out of the thermoforming process. As before in FIG. 3, the plate structure 2201 contains all the features 2209 associated with desiccant header, distribution, active zone and collection area that were discussed under FIG. 3 and 5.

FIG. 17D shows how the rear channel of the plate 2201 can be formed by a gluing robot. Inlet air stream 2210 is diverted by obstruction 2211 into a horizontal flow 2218 through an optional air turbulator 2217 and then directed by an exit obstruction 2213 into an exhaust air stream 2219. Similar to earlier figures, a desiccant supply channel 2212 and a desiccant drain channel 2213 are formed to direct liquids to the front of the panel. Water supply channel 2215 and wicking material 2220 are used to create a wetted surface 2221. Any excess water will drain into the collection channel 2216. The secondary air stream now picks up moisture from the wetted surface and cools as it is traversing in the horizontal section. This creates a cooling effect on the plate material 2201, which is then conducted to the front of the plate where the primary air stream is also cooled in a counter flow arrangement as can be seen from the figure.

FIG. 18A shows a plate structure 2301 that combines two active areas. Kozubal (US 2013/0340449) describes a two stage process wherein the stages are distinct. The first stage is a cross flow stage wherein the primary air flow is horizontal, the desiccant is vertical and the secondary air stream is also vertical. The second stage is a counter flow stage, with the primary air flow horizontal in a dry channel and the secondary air stream is siphoned off from the primary air stream in such a way as to also be horizontal and in counter flow to the primary air stream. This secondary air stream is the wetted and functions as an indirect evaporator. There however remain two problems with the system described by Kozubal: the first stage is still a cross flow stage making it less effective as a counter flow stage would be, and the desiccant in the first stage is only cooled to the wet bulb temperature of the first stage secondary air stream. Since this temperature is usually relatively high, the desiccant concentration needs to also be high to obtain proper dehumidification. High desiccant concentration is undesirable because it also requires high regeneration temperatures to remove the excess water. The structure of FIG. 18A and FIG. 18B solves both problems: the secondary air channels are constructed in such a way that the first and second stages are both in counter flow, and the liquid desiccant is first cooled in the second stage before being used in the first stage. This allows the system to operate at much lower desiccant concentrations resulting in lower regeneration temperatures.

The primary air stream 2302 then enters the first stage of air treatment where a micro-porous membrane 2304 and an air turbulator 2303 are used to expose the air stream to a cooled desiccant underneath the membrane 2304. The resulting cool, dry air stream 2319 is then directed to the second stage wherein a second air turbulator 2309 an a second membrane (not micro-porous preferably) serve to sensibly cool the air stream resulting in a cold, dry air stream 2320. A portion 2321 of the cool, dry air stream 2320 is siphoned off to the rear of the plate and will be discussed under FIG. 18B.

Liquid desiccant piping 2315 first directs a liquid desiccant to supply ports 2311, where is runs underneath the non-microporous membrane 2310. The cool liquid desiccant is then collected through ports 2314 and directed by piping 2316 and a small desiccant pump (not shown), to the top supply pipe 2317 and supply ports 2305 in the first stage. The cool desiccant now runs down the surface underneath micro-porous membrane 2304 and is collected through ports 2308 into drain pipe 2318. At the same time water (or seawater) for evaporation on the rear of the plates is directed through ports 2306 and 2312. Excess water is collected through ports 2307 and 2313 and can be removed from the system.

FIG. 18B shows the rear channels on the plate 2301 from FIG. 18A. A secondary air stream 2329 enters from the bottom of the plate 2301 and encounters an obstruction 2338 that diverts the air stream through a first stage. The diverted air stream 2335 encounters an active area 2336, which can comprise a wicking surface utilizing flocking as described earlier. Water or seawater for evaporation is supplied through ports 2306 and wicking material 2332 to run over the flocked surface 2336. Any excess water is collected by water drain 2333 and directed to drain ports 2307. Exiting air is directed by obstruction 2340 and obstructions 2332 used to create a uniform air flow to become the exhaust air stream 2337. A liquid desiccant is directed through ports 2305 into the channel 2330 and to the front of the plate 2301 as before. The used liquid desiccant is collected through drain ports 2308 into the drain channel 2334.

The second stage of FIG. 18B siphons some air 2321 from the primary air stream 2320 into the active area 2326, which can comprise a wicking surface utilizing flocking as described earlier. The active area 2326 cools and humidifies the air stream 2327 as it runs over the active surface. Water or seawater for evaporation is supplied through ports 2312 and wicking material 2324 to run over the flocked surface 2326. Any excess water is collected by water drain 2325 and directed to drain ports 2313. Exiting air is directed by obstruction 2338 and obstructions 2323 used to create a uniform air flow to become the exhaust air stream 2339. A liquid desiccant is directed through ports 2311 into the channel 2322 and to the front of the plate 2301 as in the first stage. The cooled liquid desiccant is collected through drain ports 2314 into the drain channel 2326.

The system described above thus functions as a counter flow first stage wherein a cold liquid desiccant is used to cool and dehumidify a primary air stream and a second stage wherein cool dry air and cool desiccant are produced. The cool, dry air is used for a building space and the cool desiccant is used in the first stage to provide the cooling and drying of the primary air stream. It should be clear that the first and or second evaporative channels on the backside of the plate 2301 can also be replaced by a liquid water channel as was shown in FIG. 6. It should also be clear that a third or fourth or even further stages could be added to achieve a finer and finer distribution of desiccant. One could even imagine a membrane with a graded porosity (reduced porosity as the air stream goes further down the air channel) wherein the most open/porous area is facing the incoming air stream and the least porous/closed area is facing the leaving air stream.

FIG. 18C shows in more clarity the fluid paths across the plate of FIG. 18A. Water or seawater or wastewater for evaporation is introduced at the top right at entry piping 2322. The water flows to the backside of the second section of the plate as was shown in FIG. 18B and starts evaporating. Excess water that has not evaporated will be collected through drain piping 2323 and is directed to the top of the first section at supply piping 2324. A second evaporation takes place on the rear of the first section and any final excess water is collected through piping 2325 and drained off. Alternatively, it is possible to introduce water at alternate supply piping 2326 after which it flows at the rear of the first stage and is collected at drain 2325 after which it is directed to the top of the second state through piping 2327. The water then flows through the rear of the second stage and is collected through piping 2328 and drained off. The flow of desiccant was already discussed under FIG. 18A . By arranging the liquid desiccant and the evaporating water in a two stage or multiple stage arrangement as shown a quasi-counter-flow of air and water/desiccant can be achieved with a better performance in heat and mass exchange than a cross flow arrangement and the coolest desiccant can be applied to the incoming air stream thereby lowering the required desiccant concentration.

FIG. 19 illustrates how thermoformed plates can also be used to provide a liquid to liquid heat exchanger. A first thermo formed plate 3001 contains a main seal feature 3002 used to contain a first liquid. The first liquid enters through port 3003 and is directed over the turbulating features 3011. The first liquid then reaches the drain port 3006. A second fluid is directed through port 3004 and over the surface of plate 3007, which is a mirror image of thermoformed plate 3001. Plates 3001 and 3007 are heat bonded together to form a single channel for the first liquid. The rear of the plates 3001 and 3007 can also have turbulating features (not shown). Alternatively a turbulating netting 3010 can be used for distribution and stirring of the second liquid. As before, an adhesive seal made with an adhesive robot dispensing an adhesive such as 3M 550 or 5200 poly urethane adhesive is used to form a seal 3008 for the second fluid. The adhesive seal 3009 and 3012 are used to allow the first fluid to pass to the next plate pair without mixing with the second fluid. A full heat exchanger will comprises multiple plate pairs as described in the figure.

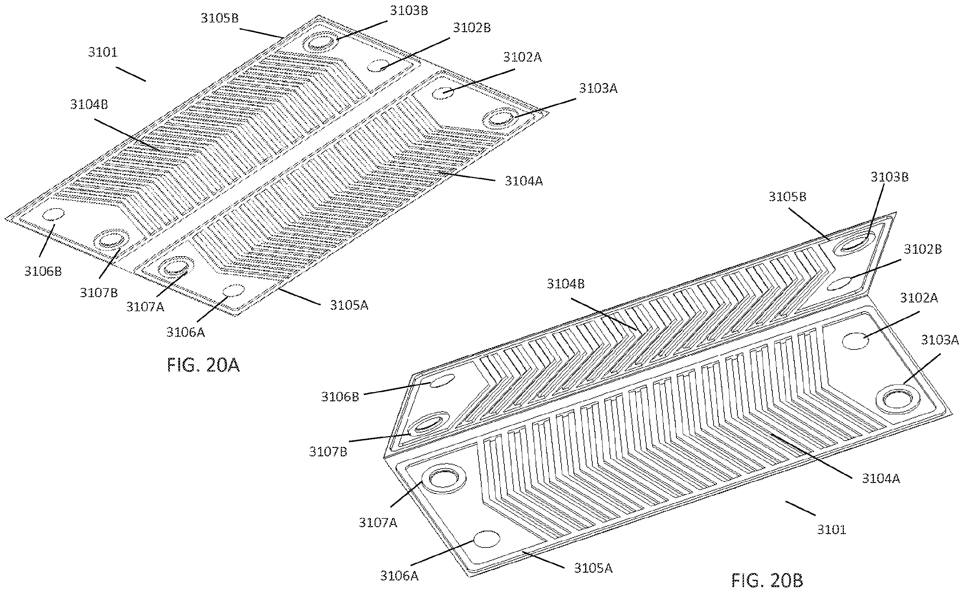

FIG. 20A illustrates an alternate method to thermoform a liquid to liquid heat exchanger plate. The two mirror image plates 3001 and 3007 from FIG. 19 can be thermo formed in a single sheet 3101. Supply ports 3102A and 3102B and 3106A and 3106B will line up as the plate is folded over as will be shown in FIG. 20B. Also the ridges around supply ports 3103A and 3103B and 3106A and 3106B will contact when the plate is folded in half as will be shown in FIG. 20B. Furthermore, the edge seals 3105A and 3105B will contact when folded over. The turbulator features 3104A and 3104B are designed to not fully contact but to only contact in small areas, which forces the liquids sideways and over in a turbulating motion.

FIG. 20B shows the thermo formed plate 3101 from FIG. 20A partially folded over. After a complete fold over the edge seals 3105A and 3105B, the ridges 3103A, 3107A, 3103B and 3107B will contact and be heat bonded hermetically together. The turbulating ridges 3104A and 3104B can be spot heat bonded in the areas where the contact if desired for structural strength.

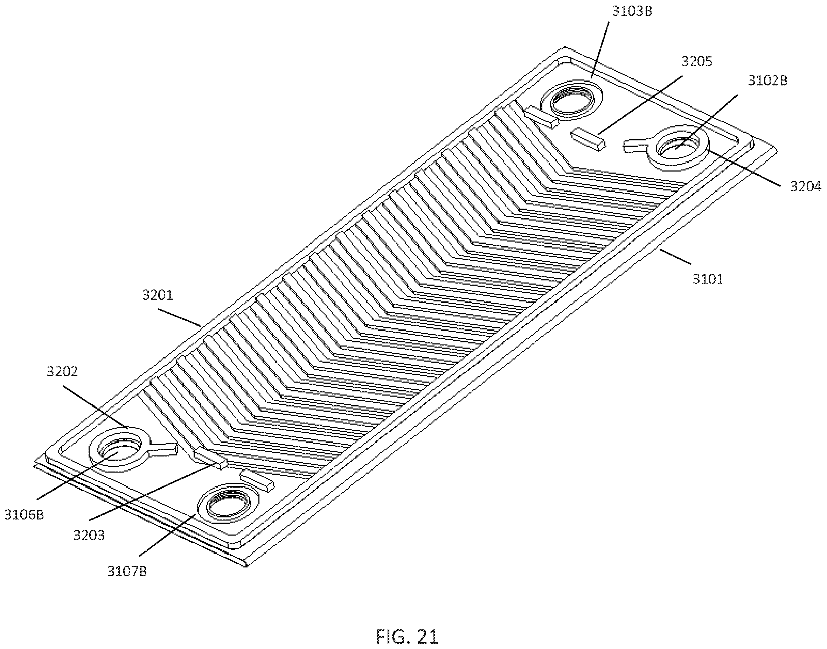

FIG. 21 now shows how the folded plate 3101 from FIG. 20A and FIG. 20B is sealed by an adhesive seal 3201 around the second channel. An adhesive seal 3202 is used around the outlet port 3106B and an additional seal 3204 is used around port 3102B. Additional distribution obstructions 3203 and 3205 can be used to ensure even liquid flows across the plates. No seal will be needed around the ports 3103B and 3107B since the heat bonding process already accomplished this seal. The structure of FIG. 21 can now be stacked multiple times to form an inexpensive plate heat exchanger for low pressure liquids.

Having thus described several illustrative embodiments, it is to be appreciated that various alterations, modifications, and improvements will readily occur to those skilled in the art. While some examples presented herein involve specific combinations of functions or structural elements, it should be understood that those functions and elements may be combined in other ways according to the present disclosure to accomplish the same or different objectives. In particular, acts, elements, and features discussed in connection with one embodiment are not intended to be excluded from similar or other roles in other embodiments. Additionally, elements and components described herein may be further divided into additional components or joined together to form fewer components for performing the same functions. Accordingly, the foregoing description and attached drawings are by way of example only, and are not intended to be limiting.

## Claims

1. A method of manufacturing a three-way heat exchanger for use in a desiccant air conditioning system, comprising the steps of:
(a) forming a plurality of plates, each plate including at least one liquid desiccant supply port (302), at least one liquid desiccant drain port, at least one heat transfer fluid supply port, and at least one heat transfer fluid drain port, each plate further including one or more features defining a liquid desiccant region on one side of the plate in fluid communication with the at least one liquid desiccant supply port and the at least one liquid desiccant drain port, each plate further including one or more features defining a heat transfer fluid region on an opposite side of the plate in fluid communication with the at least one heat transfer fluid supply port and the at least one heat transfer fluid drain port, each plate also including a plurality of holes at an upper end thereof in fluid communication with the at least one liquid desiccant supply port for distributing liquid desiccant across the liquid desiccant region, each plate also including features defining a liquid desiccant flow restriction at each of said holes to increase uniformity of liquid desiccant distributed across the liquid desiccant region;
(b) attaching a membrane (603) to said one or more features of each of said plates defining the liquid desiccant region to cover the liquid desiccant region; and
(c) attaching the plates together in a stacked manner with alternate plates being reversed such that the membrane (603) on each plate faces the membrane on an adjacent plate and defines an air stream gap between the membranes, such that the heat transfer fluid region on each plate is connected to the heat transfer fluid region on an adjacent plate, and such that the liquid desiccant supply ports (302) of the plates are in sealed fluid communication, the liquid desiccant drain ports (306) of the plates are in sealed fluid communication, the heat transfer fluid supply ports of the plates are in sealed fluid communication, and the heat transfer fluid drain ports of the plates are in sealed fluid communication.

2. The method of claim 1, wherein step (a) comprises thermo-forming the plurality of plates or injection molding the plurality of plates.

3. The method of claim 1, wherein step (b) comprises attaching the membrane (603) to the one or more features using adhesive welding, ultrasonic welding, radiofrequency (RF) bonding, microwave bonding, heat activated adhesive, or pressure sensing adhesive.

4. A three-way heat exchanger for use in a desiccant air conditioning system, comprising:
a plurality of plates, each plate including at least one liquid desiccant supply port (302), at least one liquid desiccant drain port, at least one heat transfer fluid supply port, and at least one heat transfer fluid drain port, each plate further including one or more features defining a liquid desiccant region on one side of the plate in fluid communication with the at least one liquid desiccant supply port and the at least one liquid desiccant drain port, each plate further including one or more features defining a heat transfer fluid region on an opposite side of the plate in fluid communication with the at least one heat transfer fluid supply port and the at least one heat transfer fluid drain port, each plate also including a plurality of holes at an upper end thereof in fluid communication with the at least one liquid desiccant supply port (302) for distributing liquid desiccant across the liquid desiccant region, each plate also including features defining a liquid desiccant flow restriction at each of said holes to increase uniformity of liquid desiccant distributed across the liquid desiccant region; and wherein the three-way heat exchanger further comprises:
a membrane (603) attached to said one or more features of each of said plates defining the liquid desiccant region to cover the liquid desiccant region;
wherein the plates are attached together in a stacked manner with alternate plates being reversed such that the membrane (603) on each plate faces the membrane on an adjacent plate and defines an air stream gap between the membranes, such that the heat transfer fluid region on each plate is connected to the heat transfer fluid region on an adjacent plate, and such that the liquid desiccant supply ports (302) of the plates are in sealed fluid communication, the liquid desiccant drain ports (306) of the plates are in sealed fluid communication, the heat transfer fluid supply ports of the plates are in sealed fluid communication, and the heat transfer fluid drain ports of the plates are in sealed fluid communication.

5. The heat exchanger of claim 4, wherein the one or more features defining the liquid desiccant region and the one or more features defining the heat transfer fluid region comprise ridges.

6. The heat exchanger of claim 4, wherein the liquid desiccant region of each plate further comprises a plurality of spaced-apart features thereon with a cap layer on said spaced-apart features, and wherein the membrane (603) is bonded to said cap layer.

7. The heat exchanger of claim 6, wherein the cap layer comprises polyethylene, acrylic, or Acrylonitrile Styrene Acrylic Ester material.

8. The heat exchanger of claim 6, wherein the membrane (603) is spaced approximately 0.1 to 0.2 mm away from the surface of liquid desiccant region of the plate.

9. The heat exchanger of claim 4, wherein the plates are configured to permit horizontal airflow through the air stream gap or vertical airflow through the air stream gap.

10. The heat exchanger of claim 4, wherein at least some of said plates include features to siphon off a portion of the airflow flowing through said air stream gaps, such that the siphoned portion of the airflow can be flowed across a wetted surface.

11. The heat exchanger of claim 10, wherein the wetted surface is covered by a membrane (603).

12. The heat exchanger of claim 4, further comprising a pattern of adhesive features formed on said heat transfer fluid region to promote uniform flow of heat transfer fluid.

13. The heat exchanger of claim 4, further comprising an air turbulator in the air stream gap between each pair of adjacent plates.

14. The heat exchanger of claim 13, wherein the air turbulator comprises a plurality of turbulating triangles to create a counter rotating vortex in the air stream.

15. The heat exchanger of claim 14, wherein the distance between adjacent turbulating triangles is generally twice the height of a relating triangle.

16. The heat exchanger of claim 13, wherein the air turbulator comprises a netting structure.

17. The heat exchanger of claim 4, further comprising a glue seal formed on each of said plates to direct liquid desiccant through the holes or a glue seal formed on each of said plates to direct flow of heat transfer fluid.

18. The heat exchanger of claim 4, further comprising features formed on said heat transfer fluid region to direct heat transfer fluid flow in a horizontal or vertical direction.

## Patentansprüche

1. Verfahren zum Herstellen eines Dreiweg-Wärmeübertragers zur Verwendung in einer Desiccant-Klimaanlage, das die folgenden Schritte beinhaltet:
(a) Formen einer Vielzahl von Platten, wobei jede Platte mindestens einen Flüssigdesiccant-Zufuhranschluss (302), mindestens einen Flüssigdesiccant-Abflussanschluss, mindestens einen Wärmetransportfluid-Zufuhranschluss und mindestens einen Wärmetransportfluid-Abflussanschluss umfasst, wobei jede Platte ferner ein oder mehrere Merkmale umfasst, die einen Flüssigdesiccant-Bereich auf einer Seite der Platte in Fluidkommunikation mit dem mindestens einen Flüssigdesiccant-Zufuhranschluss und dem mindestens einen Flüssigdesiccant-Abflussanschluss definieren, wobei jede Platte ferner ein oder mehrere Merkmale umfasst, die einen Wärmetransportfluid-Bereich auf einer entgegengesetzten Seite der Platte in Fluidkommunikation mit dem mindestens einen Wärmetransportfluid-Zufuhranschluss und dem mindestens einen Wärmetransportfluid-Abflussanschluss definieren, wobei jede Platte auch eine Vielzahl von Löchern an einem oberen Ende davon in Fluidkommunikation mit dem mindestens einen Flüssigdesiccant-Zufuhranschluss zum Verteilen von Flüssigdesiccant über den Flüssigdesiccant-Bereich umfasst, wobei jede Platte auch Merkmale umfasst, die eine Flüssigdesiccant-Strömungsbegrenzung an jedem der genannten Löcher definieren, um die Gleichmäßigkeit des über den Flüssigdesiccant-Bereich verteilten Flüssigdesiccants zu erhöhen;
(b) Anbringen einer Membran (603) an dem genannten einen oder den genannten mehreren Merkmalen von jeder der genannten Platten, die den Flüssigdesiccant-Bereich definieren, um den Flüssigdesiccant-Bereich abzudecken; und
(c) Anbringen der Platten zusammen auf eine gestapelte Weise, wobei alternierende Platten umgekehrt sind, sodass die Membran (603) auf jeder Platte der Membran auf einer angrenzenden Platte zugewandt ist und einen Luftstromspalt zwischen den Membranen definiert, sodass der Wärmetransportfluid-Bereich auf jeder Platte mit dem Wärmetransportfluid-Bereich auf einer angrenzenden Platte verbunden ist, und sodass die Flüssigdesiccant-Zufuhranschlüsse (302) der Platten in abgedichteter Fluidkommunikation stehen, die Flüssigdesiccant-Abflussanschlüsse (306) der Platten in abgedichteter Fluidkommunikation stehen, die Wärmetransportfluid-Zufuhranschlüsse der Platten in abgedichteter Fluidkommunikation stehen und die Wärmetransportfluid-Abflussanschlüsse der Platten in abgedichteter Fluidkommunikation stehen.

2. Verfahren gemäß Anspruch 1, wobei Schritt (a) das Thermoformen der Vielzahl von Platten oder das Spritzgießen der Vielzahl von Platten beinhaltet.

3. Verfahren gemäß Anspruch 1, wobei Schritt (b) das Anbringen der Membran (603) an dem einen oder den mehreren Merkmalen unter Verwendung von Klebstoffschweißen, Ultraschallschweißen, Hochfrequenzverkleben (RF-Verkleben, RF = Radio Frequency), Mikrowellenverkleben, wärmeaktiviertem Klebstoff oder druckempfindlichem Klebstoff beinhaltet.

4. Dreiweg-Wärmeübertrager zur Verwendung in einer Desiccant-Klimaanlage, der Folgendes beinhaltet:
eine Vielzahl von Platten, wobei jede Platte mindestens einen Flüssigdesiccant-Zufuhranschluss (302), mindestens einen Flüssigdesiccant-Abflussanschluss, mindestens einen Wärmetransportfluid-Zufuhranschluss und mindestens einen Wärmetransportfluid-Abflussanschluss umfasst, wobei jede Platte ferner ein oder mehrere Merkmale umfasst, die einen Flüssigdesiccant-Bereich auf einer Seite der Platte in Fluidkommunikation mit dem mindestens einen Flüssigdesiccant-Zufuhranschluss und dem mindestens einen Flüssigdesiccant-Abflussanschluss definieren, wobei jede Platte ferner ein oder mehrere Merkmale umfasst, die einen Wärmetransportfluid-Bereich auf einer entgegengesetzten Seite der Platte in Fluidkommunikation mit dem mindestens einen Wärmetransportfluid-Zufuhranschluss und dem mindestens einen Wärmetransportfluid-Abflussanschluss definieren, wobei jede Platte auch eine Vielzahl von Löchern an einem oberen Ende davon in Fluidkommunikation mit dem mindestens einen Flüssigdesiccant-Zufuhranschluss (302) zum Verteilen von Flüssigdesiccant über den Flüssigdesiccant-Bereich umfasst, wobei jede Platte auch Merkmale umfasst, die eine Flüssigdesiccant-Strömungsbegrenzung an jedem der genannten Löcher definieren, um die Gleichmäßigkeit des über den Flüssigdesiccant-Bereich verteilten Flüssigdesiccants zu erhöhen, und wobei der Dreiweg-Wärmeübertrager ferner Folgendes beinhaltet:
eine Membran (603), die an dem genannten einen oder den genannten mehreren Merkmalen von jeder der genannten Platten angebracht ist, die den Flüssigdesiccant-Bereich definieren, um den Flüssigdesiccant-Bereich abzudecken;
wobei die Platten zusammen auf eine gestapelte Weise angebracht sind, wobei alternierende Platten umgekehrt sind, sodass die Membran (603) auf jeder Platte der Membran auf einer angrenzenden Platte zugewandt ist und einen Luftstromspalt zwischen den Membranen definiert, sodass der Wärmetransportfluid-Bereich auf jeder Platte mit dem Wärmetransport-Bereich auf einer angrenzenden Platte verbunden ist, und sodass die Flüssigdesiccant-Zufuhranschlüsse (302) der Platten in abgedichteter Fluidkommunikation stehen, die Flüssigdesiccant-Abflussanschlüsse (306) der Platten in abgedichteter Fluidkommunikation stehen, die Wärmetransportfluid-Zufuhranschlüsse der Platten in abgedichteter Fluidkommunikation stehen und die Wärmetransportfluid-Abflussanschlüsse der Platten in abgedichteter Fluidkommunikation stehen.

5. Wärmeübertrager gemäß Anspruch 4, wobei das eine oder die mehreren Merkmale, die den Flüssigdesiccant-Bereich definieren, und das eine oder die mehreren Merkmale, die den Wärmetransportfluid-Bereich definieren, Stege beinhalten.

6. Wärmeübertrager gemäß Anspruch 4, wobei der Flüssigdesiccant-Bereich von jeder Platte ferner eine Vielzahl von beabstandeten Merkmalen darauf mit einer Decklage auf den genannten beabstandeten Merkmalen beinhaltet und wobei die Membran (603) mit der genannten Decklage verklebt ist.

7. Wärmeübertrager gemäß Anspruch 6, wobei die Decklage Polyethylen-, Acryl- oder Acrylonitril-Styrol-Acryl-Ester-Material beinhaltet.

8. Wärmeübertrager gemäß Anspruch 6, wobei die Membran (603) ungefähr 0,1 bis 0,2 mm von der Oberfläche des Flüssigdesiccant-Bereichs der Platte entfernt beabstandet ist.

9. Wärmeübertrager gemäß Anspruch 4, wobei die Platten konfiguriert sind, um horizontale Luftströmung durch den Luftstromspalt oder vertikale Luftströmung durch den Luftstromspalt zu gestatten.

10. Wärmeübertrager gemäß Anspruch 4, wobei mindestens einige der genannten Platten Merkmale umfassen, um einen Teil der Luftströmung, die durch die genannten Luftstromspalten strömt, abzusaugen, sodass der gesaugte Teil der Luftströmung über eine benetzte Oberfläche geströmt werden kann.

11. Wärmeübertrager gemäß Anspruch 10, wobei die benetzte Oberfläche durch eine Membran (603) abgedeckt ist.

12. Wärmeübertrager gemäß Anspruch 4, der ein Muster von Klebstoffmerkmalen beinhaltet, die auf dem genannten Wärmetransportfluid-Bereich geformt sind, um eine gleichmäßige Strömung von Wärmetransportfluid zu fördern.

13. Wärmeübertrager gemäß Anspruch 4, der ferner einen Luftturbulator in dem Luftstromspalt zwischen jedem Paar angrenzender Platten beinhaltet.

14. Wärmeübertrager gemäß Anspruch 13, wobei der Luftturbulator eine Vielzahl von turbulierenden Dreiecken beinhaltet, um einen gegendrehenden Wirbel in dem Luftstrom zu erzeugen.

15. Wärmeübertrager gemäß Anspruch 14, wobei der Abstand zwischen angrenzenden turbulierenden Dreiecken generell der zweifachen Höhe eines betreffenden Dreiecks entspricht.

16. Wärmeübertrager gemäß Anspruch 13, wobei der Luftturbulator eine Netzstruktur beinhaltet.

17. Wärmeübertrager gemäß Anspruch 4, der ferner eine Kleberdichtung, die auf jeder der genannten Platten geformt ist, um Flüssigdesiccant durch die Löcher zu lenken, oder eine Kleberdichtung, die auf jeder der genannten Platten geformt ist, um die Strömung des Wärmetransportfluids zu lenken, beinhaltet.

18. Wärmeübertrager gemäß Anspruch 4, der ferner Merkmale, die auf dem genannten Wärmetransportfluid-Bereich geformt sind, um die Wärmetransportfluid-Strömung in einer horizontalen oder vertikalen Richtung zu lenken, beinhaltet.

## Revendications

1. Procédé de fabrication d'un échangeur de chaleur à trois voies pour une utilisation dans un système de conditionnement d'air à desséchant, comprenant les étapes de :
(a) formation d'une pluralité de plaques, chaque plaque incluant au moins un orifice d'alimentation en desséchant liquide (302), au moins un orifice de vidange de desséchant liquide, au moins un orifice d'alimentation en fluide de transfert de chaleur, et au moins un orifice de vidange de fluide de transfert de chaleur, chaque plaque incluant en outre une ou plusieurs caractéristiques définissant une région de desséchant liquide sur un côté de la plaque en communication fluidique avec l'au moins un orifice d'alimentation en desséchant liquide et l'au moins un orifice de vidange de desséchant liquide, chaque plaque incluant en outre une ou plusieurs caractéristiques définissant une région de fluide de transfert de chaleur sur un côté opposé de la plaque en communication fluidique avec l'au moins un orifice d'alimentation en fluide de transfert de chaleur et l'au moins un orifice de vidange de fluide de transfert de chaleur, chaque plaque incluant également une pluralité de trous au niveau d'une extrémité supérieure de celle-ci en communication fluidique avec l'au moins un orifice d'alimentation en desséchant liquide pour distribuer le desséchant liquide dans toute la région de desséchant liquide, chaque plaque incluant également des caractéristiques définissant une restriction d'écoulement de desséchant liquide au niveau de chacun desdits trous pour augmenter l'uniformité du desséchant liquide distribué dans toute la région de desséchant liquide ;
(b) fixation d'une membrane (603) sur ladite ou lesdites caractéristiques de chacune desdites plaques définissant la région de desséchant liquide pour recouvrir la région de desséchant liquide ; et
(c) fixation des plaques ensemble d'une manière empilée avec des plaques en alternance qui sont inversées de sorte que la membrane (603) sur chaque plaque soit tournée vers la membrane sur une plaque adjacente et définisse un espace de courant d'air entre les membranes, de sorte que la région de fluide de transfert de chaleur sur chaque plaque soit reliée à la région de transfert de fluide de chaleur sur une plaque adjacente, et de sorte que les orifices d'alimentation en desséchant liquide (302) des plaques soient en communication fluidique étanche, les orifices de vidange de desséchant liquide (306) des plaques soient en communication fluidique étanche, les orifices d'alimentation en fluide de transfert de chaleur des plaques soient en communication fluidique étanche, et les orifices de vidange de fluide de transfert de chaleur des plaques soient en communication fluidique étanche.

2. Procédé selon la revendication 1, dans lequel l'étape (a) comprend le thermoformage de la pluralité de plaques ou le moulage par injection de la pluralité de plaques.

3. Procédé selon la revendication 1, dans lequel l'étape (b) comprend la fixation de la membrane (603) sur la ou les caractéristiques à l'aide d'un soudage adhésif, d'un soudage par ultrasons, d'une liaison par radiofréquences (RF), d'une liaison par micro-ondes, d'un adhésif activé par la chaleur, ou d'un adhésif sensible à la pression.

4. Échangeur de chaleur à trois voies pour une utilisation dans un système de conditionnement d'air à desséchant, comprenant :
une pluralité de plaques, chaque plaque incluant au moins un orifice d'alimentation en desséchant liquide (302), au moins un orifice de vidange de desséchant liquide, au moins un orifice d'alimentation en fluide de transfert de chaleur, et au moins un orifice de vidange de fluide de transfert de chaleur, chaque plaque incluant en outre une ou plusieurs caractéristiques définissant une région de desséchant liquide sur un côté de la plaque en communication fluidique avec l'au moins un orifice d'alimentation en desséchant liquide et l'au moins un orifice de vidange de desséchant liquide, chaque plaque incluant en outre une ou plusieurs caractéristiques définissant une région de fluide de transfert de chaleur sur un côté opposé de la plaque en communication fluidique avec l'au moins un orifice d'alimentation en fluide de transfert de chaleur et l'au moins un orifice de vidange de fluide de transfert de chaleur, chaque plaque incluant également une pluralité de trous au niveau d'une extrémité supérieure de celle-ci en communication fluidique avec l'au moins un orifice d'alimentation en desséchant liquide (302) pour distribuer le desséchant liquide dans toute la région de desséchant liquide, chaque plaque incluant également des caractéristiques définissant une restriction d'écoulement de desséchant liquide au niveau de chacun desdits trous pour augmenter l'uniformité du desséchant liquide distribué dans toute la région de desséchant liquide ; et l'échangeur de chaleur à trois voies comprenant en outre :
une membrane (603) fixée sur ladite ou lesdites caractéristiques de chacune desdites plaques définissant la région de desséchant liquide pour recouvrir la région de desséchant liquide ;
dans lequel lesdites plaques sont fixées ensemble d'une manière empilée avec des plaques en alternance qui sont inversées de sorte que la membrane (603) sur chaque plaque soit tournée vers la membrane sur une plaque adjacente et définisse un espace de courant d'air entre les membranes, de sorte que la région de fluide de transfert de chaleur sur chaque plaque soit reliée à la région de transfert de fluide de chaleur sur une plaque adjacente, et de sorte que les orifices d'alimentation en desséchant liquide (302) des plaques soient en communication fluidique étanche, les orifices de vidange de desséchant liquide (306) des plaques soient en communication fluidique étanche, les orifices d'alimentation en fluide de transfert de chaleur des plaques soient en communication fluidique étanche, et les orifices de vidange de fluide de transfert de chaleur des plaques soient en communication fluidique étanche.

5. Échangeur de chaleur selon la revendication 4, dans lequel la ou les caractéristiques définissant la région de desséchant liquide et la ou les caractéristiques définissant la région de fluide de transfert de chaleur comprennent des crêtes.

6. Échangeur de chaleur selon la revendication 4, dans lequel la région de desséchant liquide de chaque plaque comprend en outre une pluralité de caractéristiques espacées sur celle-ci avec une couche sur recouvrement sur lesdites caractéristiques espacées, et dans lequel la membrane (603) est liée à ladite couche de recouvrement.

7. Échangeur de chaleur selon la revendication 6, dans lequel la couche de recouvrement comprend un matériau de polyéthylène, acrylique, ou d'acrylonitrile styrène ester acrylique.

8. Échangeur de chaleur selon la revendication 6, dans lequel la membrane (603) est espacée d'approximativement 0,1 à 0,2 mm de la surface de région de desséchant liquide de la plaque.

9. Échangeur de chaleur selon la revendication 4, dans lequel les plaques sont conçues pour permettre un écoulement d'air horizontal à travers l'espace de courant d'air ou un écoulement d'air vertical à travers l'espace de courant d'air.

10. Échangeur de chaleur selon la revendication 4, dans lequel au moins certaines desdites plaques incluent des caractéristiques pour siphonner une partie de l'écoulement d'air à travers lesdits espaces de courant d'air, de sorte qu'on puisse faire s'écouler la partie siphonnée de l'écoulement d'air à travers une surface mouillée.

11. Échangeur de chaleur selon la revendication 10, dans lequel la surface mouillée est couverte par une membrane (603).

12. Échangeur de chaleur selon la revendication 4, comprenant en outre un motif de caractéristiques adhésives formées sur ladite région de fluide de transfert de chaleur pour favoriser un écoulement uniforme de fluide de transfert de chaleur.

13. Échangeur de chaleur selon la revendication 4, comprenant en outre un dispositif de création de turbulences d'air dans l'espace de courant d'air entre chaque paire de plaques adjacentes.

14. Échangeur de chaleur selon la revendication 13, dans lequel le dispositif de création de turbulences d'air comprend une pluralité de triangles de création de turbulences pour créer un vortex de rotation inverse dans le courant d'air.

15. Échangeur de chaleur selon la revendication 14, dans lequel la distance entre des triangles de création de turbulences adjacents fait généralement deux fois la hauteur d'un triangle associé.

16. Échangeur de chaleur selon la revendication 13, dans lequel le dispositif de création de turbulences d'air comprend une structure en filet.

17. Échangeur de chaleur selon la revendication 4, comprenant en outre un joint de colle formé sur chacune desdites plaques pour diriger le desséchant liquide à travers les trous ou un joint de colle formé sur chacune desdites plaques pour diriger l'écoulement de fluide de transfert de chaleur.

18. Échangeur de chaleur selon la revendication 4, comprenant en outre des caractéristiques formées sur ladite région de fluide de transfert de chaleur pour diriger l'écoulement de fluide de transfert de chaleur dans une direction horizontale ou verticale.
